(19) Europäisches Patentamt
European Patent Office
Office européen des brevets

(11) EP 0 290 149 B1

(12) EUROPEAN PATENT SPECIFICATION

(45) Date of publication and mention of the grant of the patent:
**03.07.1996 Bulletin 1996/27**

(51) Int Cl.[6]: **C08F 10/00**, C08F 4/62, C08F 4/02

(21) Application number: **88303318.5**

(22) Date of filing: **13.04.1988**

# (54) Particulate solid, production and use

Festkörperteilchen, Verfahren und Verwendung

Solides particulaires, leur préparation et application

(84) Designated Contracting States:
**AT BE DE ES FR GB IT NL SE**

(30) Priority: **13.04.1987 GB 8708778**

(43) Date of publication of application:
**09.11.1988 Bulletin 1988/45**

(73) Proprietor: **BASF Aktiengesellschaft**
**D-67063 Ludwigshafen (DE)**

(72) Inventors:
- **Cross, Bernard John**
  **Middlesbrough Cleveland (GB)**
- **Bye Ashley Dormar**
  **Hutton Village Guisborough Cleveland (GB)**
- **Jones, Peter John Vaughan**
  **Wolviston Billingham Cleveland (GB)**

(56) References cited:
**EP-A- 0 131 359**
**EP-A- 0 216 402**
**FR-A- 2 402 667**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 290 149 B1

Printed by Jouve, 75001 PARIS (FR)

## Description

The present invention relates to particulate solids, the production of such particulate solids, the use of the particulate solid to form an olefin polymerisation catalyst component, an olefin polymerisation catalyst containing said component and an olefin polymerisation process using said catalyst.

Particulate solids having an essentially spherical form generally have better powder flow characteristics than particulate solid having generally irregular form. In recent years there have been considerable advances in the polymerisation of olefin monomers using catalyst systems one component of which is a transition metal compound supported on a particulate solid. Many of these catalyst components are based on magnesium chloride as the support and there have been a number of proposals to produce magnesium chloride having an essentially spherical particle form. Thus British Patent No 2024215 discloses a particle forming technique which uses as a starting point an emulsion of a liquid alcoholate of magnesium chloride in an inert hydrocarbon. The emulsion can be quench - cooled in a controlled manner to produce solid spherical particles of magnesium chloride alcoholate. A spherical magnesium chloride based catalyst can be prepared from the spherical alcoholate by treatment with titanium tetrachloride and an organic ester.

A further example of a particle forming technique can be found in German Patent Application No 3241999 which employs a controlled precipitation of magnesium chloride in essentially spherical form from a solution containing a dissolved magnesium based compound, such as magnesium chloride dissolved in 2-ethyl hexanol by a halogen containing compound such as titanium tetrachloride.

Whilst these proposals have been effective in giving an improved particle form, we have found that, when used in a gas phase polymerisation process, the catalysts suffer from some disadvantages. More specifically, the catalyst particles tend to break-down in the catalyst handling stages or in the polymerisation vessel. Also the polymer particles formed from these catalyst particles suffer from attrition under gas phase polymerisation conditions. Furthermore the range of spherical catalyst particles produced by the magnesium chloride alcoholate and controlled precipitation routes are not uniformly active under gas phase conditions. There is a tendency for the smaller catalyst particles to be less active than the larger particles. Catalyst residue levels therefore tend to be higher in the finer fractions of polymer produced by a gas phase polymerisation. This can cause troublesome variations in subsequent product handling and blending operations. Additionally, to attain the maximum activity from these catalysts it is necessary to precontact the catalyst with an organic aluminium compound and, in the presence of monomer, to produce a small degree of polymerisation prior to introducing the catalyst system into the main polymerisation vessel.

The problems described have the consequence that some of the advantages of an improved particle form are reduced.

We have found that the magnesium chloride alcoholate and controlled precipitation routes produce dense catalyst particles which in turn produce dense polymer beads with only a minor degree of porosity.

We have now produced a particulate solid which has an improved balance of characteristics. The structure so produced is composed of a highly interconnected porous network of catalyst agglomerates in the form of spheres producing a much improved uniformity of reactivity over the range of catalyst particle sizes, with enhanced robustness both in the catalyst handling stages and in the polymerisation reactor. Furthermore, catalysts derived from this particulate solid generally do not require a prepolymerisation stage to enhance polymerisation activity in order to achieve satisfactory polymerisation activity. Moreover the polymer particles produced from this catalyst have particularly advantageous properties. Thus, the polymer particles have a high degree of porosity which permits ready incorporation of additives without compromising the excellent flow characteristics of the polymer product. The polymer also has a much improved uniformity of catalyst residue concentrations over the range of particle sizes comprising the polymer.

These polymer properties make the polymer particles suitable for the formation of a master batch of the polymer with a liquid additive. In particular the polymer product may be directly treated with a suitable blend of additives in a liquid form thereby avoiding the need to use the energy intensive blending step commonly used with current propylene polymers.

According to the present invention there is provided a particulate solid which is formed from a compound of the general formula

$$Mg(OR)_xX_{(2-x)}$$

the particles of the solid being essentially spherical and having a surface area of at least 15 $m^2/g$, wherein

R is a group R' or COR';
R' is a hydrocarbyl group;
X is a halogen atom; and
x is from 1 up to 2 and preferably 0.5 to 2.

For convenience, the compound of the general formula $Mg(OR)_xX_{(2-x)}$ will be referred to simply as the "magnesium compound".

The magnesium compound is more preferably one in which the value of x is at least one and especially one in which the value of x is two. The group R is preferably a group R'. It is preferred that R' is an alkyl group, especially one containing at least two carbon atoms. The group R' preferably contains not more than 18 carbon atoms, especially not more than 10 carbon atoms. If the group R is a group COR', the group R' may be an alkyl, cycloalkyl or aryl group, for example a cyclohexyl or phenyl group.

The surface area of the preferred particulate solid is at least 25 $m^2/g$ and especially preferred solids have a surface area of at least 50 $m^2/g$.

As a preferred embodiment of the present invention there is provided a particulate solid formed from a compound of the general formula

$$Mg\,(OR^2)_2,$$

the particles of the solid being essentially spherical and having a surface area of at least 50 $m^2/g$, wherein

$R^2$ is an alkyl group containing at least two carbon atoms.

It is particularly preferred that the magnesium compound is magnesium diethoxide, $Mg\,(OC_2H_5)_2$.

The particulate solid of the present invention is typically an agglomeration of sub particles. In such materials the sub-particles typically have an average particle size of not more than 5 micrometres, particularly less than 2 micrometres.

The particulate solid is typically porous but the measurement of porosity in these solids has proved to be difficult. The three internationally recognised standard techniques for measuring particle porosity namely by determing the nitrogen sorption/desorption isotherm by helium/mercury relative density measurements or by mercury intrusion/extrusion measurements have been found to be unsatisfactory when applied to the particulate solid of the present invention. However, a measurement of porosity can be effected by measuring the amount of liquid the solid can absorb before the solid particles begin to stick together. If the liquid being absorbed is ethanol, the solid is typically capable of absorbing at least 0.6 $cm^3$ of ethanol per gramme of solid. Preferred solids can absorb at least 0.9 $cm^3$, or especially at least 1.0 $cm^3$, of ethanol per gramme of solid.

We have found that porosity is retained in materials derived from the particulate solid. Thus, measurements of particulate solid porosity can be implied from, for example, mercury intrusion/extrusion measurements on a propylene polymer obtained using a catalyst one component of which is derived from the particulate solid. Such measurements show that the derived polymer has a highly interconnected porous structure.

The porosity in polymer derived from catalysts based on the particulate solids of the present invention can clearly be observed from scanning electron micrographs of sections cut from typical samples of propylene polymer powder. By way of comparison it can be shown that polymers derived from catalysts made from magnesium chloride or magnesium chloride alcoholates have a much denser polymer structure with little porosity.

The particulate solid typically has a narrow particle size distribution. Preferably less than 10% by weight of the particles have a particle size of below 10 micrometres. The most preferred particulate solids are those in which less than 10% by weight of the particles have a particle size of more than 100 micrometres. It is particularly preferred that the particulate solid has an average particle size in the range from 40 to 80 micrometres. The average particle size is defined as that particle size in microns corresponding to which 50% by weight of the particles in the sample analysed have particle sizes less than this value.

The particulate solid preferably includes, in addition to the magnesium compound, a minor proportion of a material which either assists in the agglomeration of the sub-particles forming the particulate solid and/or which gives the particulate solid an improved resistance to attrition. For convenience, this material will be referred to as an "attrition inhibitor". The attrition inhibitor should be such that it does not have an effect which would be deleterious in the subsequent use of the particulate solid, for example an adverse effect on the activity and/or stereospecificity of a polymerisation catalyst which is obtained from a polymerisation catalyst component supported on the particulate solid. If the particulate solid is suspended in a liquid medium, the attrition inhibitor preferably should be such as to at least minimise dispersion of the pariculate solid into smaller particles in the presence of the liquid medium in which the particulate solid is suspended. Hence, whilst the attrition inhibitor can be soluble in some liquids, it is preferably insoluble, or of low solubility, in any liquid medium in which the particulate solid is suspended for any subsequent treatment.

The attrition inhibitor may be for example polystyrene, polymethylmethacrylate, polyvinylacetate, atactic polypropylene or an AB block copolymer, for example, of t-butylstyrene/styrene. Useful results can be obtained using polystyrene and polymethylmethacrylate as the attrition inhibitor. If the attrition inhibitor is polystyrene or polymethylmethacrylate such materials are generally soluble in aromatic liquids such as toluene. Hence, if the particulate solid contains polystyrene or polymethylmethacrylate as the attrition inhibitor, the particulate is preferably not contacted with an aromatic liquid but rather is suspended in an aliphatic liquid medium. The amount of the attrition inhibitor is preferably from 0.5 up to 10% by weight relative to the total weight of the particulate solid and is conveniently from 0.5 up to 4%

by weight relative to the particulate solid.

Preferred particulate solids in accordance with the present invention show good resistance to mechanical breakdown. This resistance is retained in materials derived from the particulate solid. Thus, as is discussed in more detail hereafter, propylene polymers obtained using a polymerisation catalyst, at least one component of which includes a particulate solid in accordance with the present invention, have good resistance to mechanical breakdown as indicated by the small change in the particle size of the polymer or powder after being subjected to high speed mechanical agitation.

The particulate solid of the present invention is conveniently obtained by spray drying.

Thus, as a further aspect of the present invention there is provided a process for the production of a particulate solid which comprises suspending, in an inert liquid medium, a solid which is a compound of the general formula

$$Mg\,(OR)_x\,X_{(2-x)},$$

spray drying the suspension and collecting the spray dried solid, wherein,

R, X and x are as hereinbefore defined.

The inert liquid medium is conveniently a liquid hydrocarbon or liquid halohydrocarbon. The inert liquid medium preferably includes an attrition inhibitor, particularly the inert liquid medium is a solution of the attrition inhibitor in a liquid which is a solvent for the attrition inhibitor and essentially a non-solvent for the magnesium compound. Suitable liquids are aromatic hydrocarbons such as benzene and toluene.

Prior to the spray drying stage, the suspension may be subjected to mechanical action to cause a reduction in the particle size of the solid material. Such a procedure will be referred to hereafter as "pulverisation".

The process of pulverising and spray drying a mixture of a solid and a liquid medium is disclosed in European Patent Specification No 72128. The process of spray drying, preferably after pulverising, a mixture of magnesium chloride and a liquid medium is disclosed in European Patent Specification No 72129. In accordance with European Patent Specification No 72129 the spray dried magnesium chloride, which may include a Lewis Base compound, is post-treated with a transition metal compound, particularly titanium tetrachloride, and optionally a Lewis Base compound, to form a transition metal composition which may be used as a component of an olefin polymerisation catalyst. However, we have found that the spray dried magnesium chloride thus obtained, and derivatives obtained therefrom, differ from the particulate solid of the present invention in a number of respects. Thus, the spray dried magnesium chloride of European Patent Specification 72129 typically has a surface area of less than 10 $m^2/g$, contains a relatively large proportion of fine powder, has a low porosity and a low resistance to mechanical agitation.

The liquid medium in which the magnesium compound is suspended is preferably one which does not have a harmful effect on the useful characteristics of the particulate solid obtained by spray drying or on materials derived from the particulate solid such as supported transition metal olefin polymerisation catalyst components.

A wide range of liquids may be used as the liquid medium provided that any residual quantities of the liquid which remain in the spray-dried particulate solid are insufficient to have a harmful effect on a supported transition metal composition derived from the particulate solid when the supported transition metal composition is used as a component of a polymerisation catalyst. In general, it is preferred that the liquid medium is an inert liquid. Thus, the liquid medium is preferably an aliphatic hydrocarbon such as hexane, heptane, octane, decane, dodecane or mixtures thereof or an aromatic hydrocarbon such as benzene, toluene or xylene or a halohydrocarbon such as chlorobenzene or 1,2-dichloroethane.

The relative proportions of the solid of the formula $Mg(OR)_xX_{(2-x)}$ and the liquid medium should be such that a mobile suspension of the solid material in the liquid medium is obtained. Thus, typically it is preferred to use the liquid medium in the proportions of at least 0.5 $cm^3$ for each gramme of the solid and, in particular, it is preferred to use at least one $cm^3$ of liquid for each gramme of the solid. In general, the amount of the liquid medium need not exceed 20 $cm^3$ for each gramme of the solid and satisfactory results can be achieved using from 2 up to 10 cm3 of the liquid medium for each gramme of the solid.

The mixture being spray dried preferably includes an attrition inhibitor, which is present as a solution in the inert liquid medium. The amount of the attrition inhibitor, if present, is preferably such as to give 0.5 up to 10%, especially 0.5 up to 4%, by weight relative to the total weight of the particulate solid obtained by the spray drying process.

The suspension of the solid in the liquid medium may be spray-dried using conventional spray-drying techniques. Thus, the suspension is passed through a suitable atomizer which creates a spray or dispersion of droplets of the suspension, a stream of hot gas is arranged to contact the droplets and cause evaporation of the liquid medium and the particulate solid which separates is collected. Suitable atomizers for producing droplets of the suspension include nozzle atomizers and spinning disc atomizers. The gas which contacts the droplets may be any suitable gas and is preferably a gas which does not react with the solid under the conditions of spray-drying. It is generally preferred to use an oxygen-and water-free gaseous medium in order to avoid the presence of undesirable materials in the spray-dried product. However, spray-drying of the solid may be effected in dry air or dry oxygen provided there is no reaction between oxygen and the solid under the conditions used for the spray-drying. A suitable gasous medium for effecting spray-drying is nitrogen having a high degree of purity, but any other gaseous medium may be used, particularly one which will have no deleterious effect on the particulate solid or materials derived therefrom such as supported transition metal compositions. Alternative gaseous materials which may be used include hydrogen and the inert gases such as argon or helium.

If it is desired to prevent the ingress of oxygen- or particularly water vapour-containing materials into the spray-drying apparatus, it is preferred to operate at a slightly elevated pressure, for example, at about 1.2 kg/cm$^2$ absolute. Although the temperature may be below the boiling temperature of the liquid medium under the pressure conditions which exist within the spray- drying apparatus, the temperature should be such as to cause sufficient evaporation of the liquid medium to dry at least the outer surface of the droplets before they reach the wall, or discharge point, of the spray-drying apparatus.

The temperature of the spray-drying may be any desired temperature provided this does not have any undue effect on the nature of the particulate solid which is the product of spray-drying. In general, it is preferred that the temperature of the hot gas introduced into the spray-drying apparatus does not exceed about 200°C. It is also preferred that the temperature of the droplets, or of the spray-dried material obtained, does not exceed about 200°C and preferably does not exceed about 150°C. To achieve sufficient evaporation of the liquid medium in the droplets, it is preferred that the temperature of the gas is at least 80°C. In general, the spray-drying will be effected by using a suspension at ambient temperature to produce the spray and evaporating the liquid from the spray by means of a hot gas which is introduced into the spray-drying apparatus.

The hot gas may be arranged to pass either in a counter-current flow relative to the droplets of the mixture or may be arranged to pass a cocurrent flow relative to the droplets of the mixture. Using a cocurrent flow, the atomizer is typically located at the top of the spray-drying apparatus and the hot gas is introduced into the top of the apparatus and is removed from near the bottom of the apparatus. The hot gas can be introduced from the side of the apparatus, at the top, to cause a spiral gas flow within the spray-drying apparatus and thereby increase the effective length of the spray-drying apparatus. With a counter-current flow, the atomizer is typically located at the bottom of the spray-drying apparatus and arranged to spray upwardly against a current of hot gas introduced into the top of the apparatus.

Some of the spray-dried solid collects at the bottom of the apparatus, from which it may be removed, preferably continuously, by suitable means such as a star feeder valve, a screw conveyor, or in the hot gas stream.

The hot gas, which has been cooled by its passage through the spray-drying apparatus may be removed separately from the spray-drying apparatus. The hot gas may be passed through a cyclone to remove entrained solid, and the solid removed in the cyclone may be added to any which is separately removed from the spray-drying apparatus. The vapour of the liquid medium which is present in the hot gas is desirably condensed in a suitable condenser, and the condensed liquid medium can be re-used for mixing with the solid material and subsequent grinding. The gas may then be reheated and recirculated to the spray-drying apparatus.

The conditions of spray-drying can be adjusted to give any desired particle size and it is preferred that essentially all, that is at least 90%, of the particles of the final spray-dried material are in the range from 5 up to 150 micrometres particularly between 10 and 100 micrometres, for example having an average particle size of about 50 micrometres.

The magnesium compound may be spray dried without being subjected to any preliminary treatment. However, the particle size, and particle size distribution, of the magnesium compound may be such that the magnesium compound does not readily spray dry or does not give a spray dried product having a satisfactory particle form. The particle form and/or size of the magnesium compound may be improved by grinding, or otherwise comminuting, the magnesium compound in the absence of a liquid medium. However, although such a comminution process does give a reduction in particle size, the comminuted product is not entirely satisfactory when used in a spray drying process. Hence, we prefer to effect pulverisation of the suspension of the magnesium compound in the inert liquid medium.

More specifically, a solid material which is, or contains, the magnesium compound is mixed with a liquid medium, the mixture is subjected to mechanical action to cause a reduction in the particle size of the solid material and the resulting material is spray-dried.

The pulverising of the mixture of the magnesium compound and the liquid medium can be effected using any technique wherein mechanical action causes a reduction in the particle size of the solid material. It will be appreciated that a reduction in the particle size is used herein to mean that the average particle size of the magnesium compound after being subjected to the mechanical action is less than the average particle size of the magnesium compound before being subjected to the mechanical action. The average particle size of the magnesium compound after the pulverising stage will be dependent on the nature of the magnesium compound, the initial average particle size of the magnesium compound and the duration and intensity of the pulverising stage. In general the average particle size of the pulverised magnesium compound is less than 5 micrometres and particularly does not exceed 2 micrometres.

One pulversing process which may be used in accordance with the present invention is to grind the mixture of the magnesium compound and the liquid medium. This grinding may be effected in any suitable type of grinding apparatus, for example a rotating or vibrating ball mill. As will be discussed in more detail hereafter, the magnesium compound may be subjected to a preliminary grinding stage in the absence of the liquid medium. If such an optional preliminary grinding stage is effected, pulverisation by grinding a mixture of the magnesium compound and the liquid medium can be effected in the same grinding apparatus by the addition of a desired quantity of the liquid medium to the grinding apparatus and then continuing to grind for the desired period of time. If pulverisation is effected by grinding the mixture, the time of grinding is dependent on the intensity of the grinding and we have found that the mixture may be spray-dried satisfactorily by vibration grinding the mixture for times of from 3 hours up to 100 hours, particularly from 6 hours up to 50 hours.

An alternative pulverising process which may be used is to subject a suspension of the magnesium compound in the liquid medium simultaneously to vigorous agitation and to a shearing action. This treatment is conveniently effected using an agitation device which is capable of rapid rotation and which includes means for producing a shearing action. The device is desirably capable of rotation at a speed of at least 1000 rpm and conveniently at least 5000 rpm, for example, at 10000 rpm. The shearing action may be achieved by providing spaced, upstanding concentric projections on a disc mounted on the agitator shaft and by also locating similar stationary projections which fit into the gaps between the spaced projections on the agitator shaft. The projections have slots formed therein whereby the liquid medium is drawn through the system as the agitator shaft is rotated. The gap between the rotatable projections and the stationary projections is small and typically does not exceed one millimetre. The high relative motion of the projections on the rotating agitator shaft relative to the stationary projections and the narrow gap between these projections produces a high shearing effect and causes a breakdown of the particles of the solid material. The combined vigorous agitation and shearing action may be achieved using devices which are suitable for emulsifying an oil in a liquid which is immiscible therewith. A suitable device for this purpose is a stirrer of the Ultra Turrax type which is available from Janke and Kunkel KG IKA Werke or a high shear mixer available from Silverson Machines Limited of Chesham, Buckinghamshire, England.

The suspension of the magnesium compound in the liquid medium is pulverised by being subjected to the simultaneous vigorous agitation and shearing for a period of time which is dependent on the device used to effect the simultaneous vigorous agitation and shearing. The time is typically from one minute up to 10 hours, conveniently from 30 minutes up to five hours. During the simultaneous vigorous agitation and shearing, the mixture is desirably cooled since heat is generated as a consequence of the simultaneous vigorous agitation and shearing and the temperature of the liquid medium can rise quite considerably. The simultaneous vigorous agitation and shearing is conveniently effected using a suspension of the magnesium compound in the liquid medium, where the suspension is initially at ambient temperature.

Whilst all of the foregoing pulverisation techniques give a reduction in the particle size of the magnesium compound, we have found that the most suitable pulverisation technique to achieve the desired reduction in particle size is by grinding. Hence, as a preferred embodiment of the further aspect of the present invention, a suspension of the magnesium compound in the liquid medium is subjected to grinding and the ground mixture is spray dried. If the suspension is ground in a vibration mill, grinding for a period of from 6 to 50 hours can result in a solid, the bulk of which has a particle size of approximately one micrometre. In order to handle the ground suspension, it is preferred that the solids content of the suspension is not more than about 40% by weight, for example about 25% by weight.

If an attrition inhibitor is to be present during the spray drying stage, this may be added to the pulverised suspension but it is generally more convenient to add the attrition inhibitor to the initial suspension, prior to the pulverisation step, and to effect the pulverisation in the presence of the attrition inhibitor.

As noted previously herein, the particulate solid may be used to form a component of an olefin polymerisation catalyst. Many such components contain at least one Lewis Base compound which may be incorporated into the support material prior to forming the supported catalyst component. Hence, the particulate solid of the present invention may contain at least one Lewis Base compound, in addition to any optional attrition inhibitor.

Thus, as a further aspect of the present invention there is provided a particulate solid which is formed from a compound of the general formula

$$Mg(OR)_xX_{(2-x)},$$

the particles of the solid being essentially spherical and having a surface area of at least 15 $m^2/g$, the particulate solid also including a Lewis Base compound, wherein

R, X and x are all as hereinbefore defined.

The particulate solid containing a Lewis Base compound may be obtained by contacting the Lewis Base compound with the magnesium compound before or after the latter has been formed into the particulate solid of the present invention.

One technique of effecting the desired contacting is by co-grinding the magnesium compound with the Lewis Base compound. It will be appreciated that, if the magnesium compound is ground with a Lewis Base compound, such a grinding stage should be effected before the formation of the particulate solid. Alternatively, the magnesium compound may be contacted with a Lewis Base compound without carrying out a grinding stage. It will be appreciated that such a procedure is particularly useful if the particulate solid is contacted with the Lewis Base compound.

More specifically, prior to effecting the mixing with the liquid medium, optionally pulverising and spray-drying, the magnesium compound is subjected to an optional preliminary stage, particularly a preliminary grinding stage, in which the magnesium compound is ground in the essential absence of the inert liquid medium but in the presence of a least one Lewis Base compound. By "essential absence of the inert liquid medium" we mean that any liquid which is present, other than the Lewis Base compound, does not form a separate liquid phase. It will be appreciated that some liquid can be absorbed by the magnesium compound and hence that the total absence of an added liquid medium is not required. Typically, the amount of the liquid medium is not more than 0.2 $cm^3$, and especially not more than 0.1 $cm^3$, for each gramme of the solid material.

The Lewis Base compound which may be used as the modifying substance can be any Lewis Base compound, especially an organic Lewis Base compound, which has previously been proposed for use in an olefin polymerisation catalyst system. Thus, the Lewis Base compound may be an ether, an ester, a ketone, an alcohol, an orthoester, a sulphide (a thioether), an ester of a thiocaboxylic acid (a thioester), a thioketone, a thiol, a sulphone, a sulphonamide, a fused ring compound containing a heterocyclic sulphur atom, an organic silicon compound such as a silane or a siloxane, an amide such as formamide, urea and substituted derivatives thereof such as tetramethyl urea, thiourea, an alkanolamine, an amine, which term includes a cyclic amine, a diamine, or a polyamine, for example, pyridine, quinoline, or tetramethylethylenediamine, or an organic phosphorous compound such as an organic phosphine, an organic phosphine oxide, an organic phosphite or an organic phosphate. The use of organic Lewis Base compounds is disclosed, inter alia, in British patent specifications 803 198, 809 717, 880 998, 896 509, 920 118, 921 954, 933 236, 940 125, 966 025, 969 074, 971 248, 1 013 363, 1 017 977, 1 049 723, 1 122 010, 1 150 850, 1 208 815, 1 234 657, 1 324 173, 1 359 328, 1 383 207, 1 387 890, 1 423 658, 1 423 659, 1 423 660, 1 495 031, 1 527 736, 1 554 574 and 1 559 194.

Lewis Bases which have been disclosed as being particularly useful in the production of polymersation catalysts include ethers, carboxylic acids and esters, organic silicon compounds and organic phosphorous compounds. We particularly prefer that the Lewis Base compound is an acid, an ester or an organo-silicon compound.

The acid or ester is most preferably an aromatic acid or ester, in particular a compound of the general formula

$$R^3{}_y\ Ar\ (COOR^4)_z$$

wherein

Ar is a residue of an aromatic hydrocarbon;
$R^3$ is a hydrocarbon radical, a halohydrocarbon radical, a halogen atom or a group $OR^5$;
$R^4$ is a hydrogen atom, a hydrocarbon radical or a halohydrocarbon radical;
$R^5$ is a hydrocarbon radical or a halohydrocarbon radical;
y is 0 or an integer; and
z is an integer.

The group Ar typically is a mono- or divalent residue derived from an aromatic hydrocarbon such as benzene or naphthalene. If the group Ar is a divalent residue it may be, for example, a divalent benzene residue wherein the unoccupied valencies are in the ortho- or para-position to each other.

The, or each, group $R^3$, when present, is typically a hydrocarbon radical or a group $OR^5$, especially an alkyl or alkoxy group, particularly one containing up to 10 carbon atoms, for example an alkyl or alkoxy group containing 1 to 6 carbon atoms such as a methyl, ethyl, butyl or methoxy group.

It is preferred that at least one of the groups $R^4$ is a hydrocarbon radical. If the value of z is greater than one, the groups $R^4$ may be the same or different, for example one group $R^4$ may be a hydrogen atom and at least one group $R^4$ is a hydrocarbon radical, particularly an alkyl group. The group $R^4$ is preferably an alkyl group containing up to 10 carbon atoms and it is especially preferred that the alkyl group contains at least 4 carbon atoms, for example ethyl, n-propyl and especially n-butyl, iso-butyl or 2-ethylhexyl groups.

The value of z is at least one but preferably does not exceed two. The value of y can be zero and it is generally preferred that the value of (y+z) does not exceed two. Especially preferred are those compounds in which the value of z is two and the groups ($COOR^4$) are in the ortho-position to each other. Compounds of the general formula

$$R^3{}_y\ Ar\ (COOR^4)_z$$

include methyl, ethyl and butyl benzoate, 4-methoxybenzoic acid, ethyl 4-methoxybenzoate, methyl 4-methylbenzoate and especially the mono-and di- esters of phthalic acid such as diethylphthalate, di-n-propyl phthalate and particularly di-n-butyl phthalate, di-iso-butyl phthalate and di-2-ethylhexyl phthalate.

Organic silicon compounds which may be present include compounds containing one or more Si-$OR^6$, Si-$OCOR^6$ or Si-$NR^6$ bonds,

wherein

$R^6$ is a hydrocarbon radical which may be substituted with one or more halogen atoms and/or oxyhydrocarbon groups.

Preferred silicon compounds are those of formula

$$R^{ii}SiOR^{iii}AB$$

in which

$R^{ii}$ or $R^{iii}$ are individually alkyl, cycloalkyl or aryl groups containing 1 to 10 carbon atoms and preferably at least one of $R^{ii}$ and $R^{iii}$ is a secondary, tertiary or branched chain alkyl group containing 3 to 25 carbon atoms. A and B are individually groups of formula $OR^{iv}$ or $R^{v}$ in which $R^{iv}$ or $R^{v}$ is an alkyl, cycloalkyl or aryl group containing 1 to 10 carbon atoms.

Organic silicon compounds which may be present as the Lewis Base component include phenyltriethoxy-silane, diphenyl diisobutoxysilane, diphenyldimethoxysilane and iso-butyl triethoxysilane.

The amount of Lewis Base compound which is present in the particulate solid can be any quantity used previously but typically does not exceed one mole of Lewis Base compound for each mole of the magnesium compound.

If the Lewis Base compound is used in an optional preliminary grinding stage, this may be effected for a time which is dependent on the intensity of the grinding but, using a rotating or vibrating ball mill, typically will be from 0.5 hours up to 100 hours with the vibrating ball mill generally requiring a shorter time. The grinding temperature can be within a wide range of temperature, for example from -50°C up to 100°C and the temperature can be varied during the course of milling. For many materials, temperatures in the range 0°C up to 50°C are suitable.

After being subjected to the optional preliminary grinding stage in the presence of at least one Lewis Base compound, an inert liquid medium is added to the ground magnesium compound, and the resulting suspension is spray-dried, with or without a preliminary pulverization step.

The particulate solid may be used to obtain an olefin polymerization catalyst component. As is well known in the art, olefin polymerization catalysts are based on compounds of transition metals, particularly titanium halides.

Thus, as a yet further aspect of the present invention there is provided a transition metal composition which is the reaction product of at least one compound of a transition metal compound of Group IVA, VA or VIA of the Periodic Table with a particulate solid in accordance with the present invention.

All references herein to the Periodic Table are to the Short Periodic Table as set out inside the back cover of "General and Inorganic Chemistry" by J R Partington, Second Edition, published MacMillan and Company Limited, London, 1954.

For convenience hereafter, the term "transition metal compounds" will be used to mean a transition metal compound of Group IVA, VA or VIA of the Periodic Table. The transition metal may be, for example, vanadium or zirconium and is preferably titanium. Preferred transition metal compounds are the halides or oxyhalides, for example, vanadium tetrachloride, vanadium oxytrichloride, zirconium tetrachloride and especially preferred are the titanium halides such as titanium tetrachloride and titanium trichloride. Whilst more than one compound of a transition metal may be used, for example a mixture of a vanadium halide and a titanium halide such as a mixture of vanadium tetrachloride and titanium tetrachloride, it is generally preferred, especially if the final product is to be used for the polymerisation of propylene or other higher alpha-olefin monomer, to use only one transition metal compound, which is preferably a titanium halide.

It is preferred that the reaction product is obtained by reacting the transition metal compound with the particulate solid without using a comminution stage. The reaction is preferably effected by treating the particulate solid with a liquid medium which contains the transition metal compound.

The treatment with the transition metal compound is conveniently effected by suspending the particulate solid in a liquid medium which is, or which contains, the transition metal compound. A number of transition metal compounds are liquids, for example, titanium tetrachloride, and using such liquid transition metal compound the particulate solid may be suspended in the undiluted liquid transition metal compound. It will be appreciated that if the particulate solid is suspended in a liquid transition metal compound, there will be a substantial excess of the transition metal compound relative to the particulate solid. Alternatively, the particulate solid may be suspended in a liquid medium which comprises a solution of the transition metal compound in a suitable solvent. If the particulate solid is suspended in a solution of the transition metal compound, the proportion of the transition metal compound to the particulate solid may be varied from about 0.1 millimoles of the transition metal compound for each gramme of the particulate solid up to a substantial excess, that is, more than one mole per mole, of the transition metal compound relative to the particulate solid. The procedure used will depend on the way in which the supported transition metal composition is to be used but, in general, we prefer to carry out this stage by suspending the particulate solid in a solution of the transition metal compound.

The treatment of the particulate solid with the transition metal compound is preferably effected at an elevated temperature and, in particular, at a temperature of at least 60°C. The treatment may be effected at any temperature up to the boiling temperature of the liquid medium in which the particulate solid is suspended and thus temperatures of up to 200°C may be used. If the particulate solid is suspended in a liquid transition metal compound the process may be effected at a temperature of up to the reflux temperature of the liquid transition metal compound, and when titanium tetrachloride is used this temperature is about 137°C. In general, however, a temperature of from about 80°C to 120°C is suitable and it is preferred to use a solution of the transition metal compound in an inert liquid medium.

Some transition metal compounds which may be contacted with the particulate solid may be compounds having a reduced stability at elevated temperature. If such a compound is used it will be appreciated that contacting of this compound with the particulate solid should be effected at a low temperature so that there is no substantial deterioration or decomposition of the transition metal compound.

It will also be appreciated that if desired the particulate solid may be contacted as a dry solid with a gaseous stream containing the vapour of the transition metal compound and such a treatment may be effected at a temperature in the range previously indicated for treatments with a liquid medium containing the transition metal compound.

The treatment of the particulate solid with the transition metal compound is effected for a period of time which is sufficient to allow a desired extent of reaction between the transition metal compound and the particulate solid. In general, it is sufficient to allow the transition metal compound to remain in contact with the particulate solid for a period of from 5 minutes up to 20 hours and typically from 1 up to 5 hours.

The particulate solid may be subjected to more than one treatment with the transition metal compound, and such treatments may be effected using the same or a different transition metal compound. A procedure in which the particulate solid is treated in two stages with the same transition metal compound is generally preferred.

A particularly preferred process for the production of the reaction product is to suspend the particulate solid in a liquid medium which is a solution of a transition metal compound in an inert liquid medium, separating the solid from the liquid medium and then suspending the particulate solid in a further liquid medium which is either a solution of a transition metal compound in an inert liquid medium or an undiluted liquid transition metal compound.

After the treatment with the transition metal compound, depending on the relative proportions of transition metal compound and particulate solid which are used, the transition metal composition may be separated from the liquid medium and optionally washed several times to remove at least some unreacted transition metal compound from the transition metal composition. The transition metal composition may be finally suspended in a suitable liquid medium or may be obtained as a dry solid.

In addition to the stages hereinbefore described, the production of the transition metal composition may involve additional stages. Specifically, the particulate solid may be treated with at least one Lewis Base compound. This may be additional to any Lewis Base compound present in the particulate solid. The Lewis Base compound used may be any suitable Lewis Base compound as previously discussed in more detail. The treatment with the Lewis Base compound may be effected before, during or after the treatment of the particulate solid with the transition metal compound. The treatment of the particulate solid with the Lewis Base compound is preferably effected without using a comminution stage. The treatment with the Lewis Base compound is very preferably effected before, or especially during, the treatment with the transition metal compound. If treatment with the transition metal compound is effected in two, or more, stages, the Lewis Base compound can be used in some or all of these treatment stages but is preferably used only during the first stage of treating with the transition metal compound. If two treatment stages with the transition metal compound are carried out, the use of a Lewis Base compound in both stages results in a transition metal composition having a reduced polymerisation activity, but increased stereospecificity if used as a component for the polymerisation of propylene.

Particularly preferred transition metal compositions in accordance with the yet further aspect of the present invention are those which also include a Lewis Base compound.

The transition metal compositions preferably retain essentially the particle form of the particulate solid used to form the transition metal composition, although it will be appreciated that the reaction with the transition metal compound, and optionally the Lewis Base compound, may result in a change in the surface area and/or porosity of the particulate solid. The treatment with the transition metal compound can result in some breakdown of the particulate solid into smaller particles and this is most likely to occur if an undiluted liquid transition metal compound, such as titanium tetrachloride, is used. Hence, it is preferred to use a solution of the transition metal compound in an inert liquid medium, particularly a liquid medium in which the attrition inhibitor, if present, is essentially insoluble. Suitable inert liquids are aliphatic hydrocarbons, particularly those containing at least six carbon atoms. Preferably a solution of titanium tetrachloride in an aliphatic hydrocarbon is used which contains from 25 % to 85% by weight of titanium tetrachloride.

The amount of the solid component added to the solution of the transition metal compound in the inert liquid medium must be limited to minimise abrasion caused by particle-particle contact during the catalyst preparation step. Preferably the amount of spray dried solid component added to a solution of titanium tetrachloride in the aliphatic hydrocarbon should not exceed 7.5% by weight.

The transition metal composition which is a yet further aspect of the present invention, may be used together with an organic compound of a non-transition metal to give a polymerisation catalyst system.

Thus, as a further aspect of the present invention, there is provided a polymerisation catalyst system which is the product obtained by mixing together

1) a transition metal composition as hereinbefore described; and;
2) an organic compound of a non-transition metal of Groups I to IV of the Periodic Table.

Component 2 of the catalyst may be an organo-metallic derivative of a metal of Groups IA, IIA, IIB, IIIB, or IVB of the Periodic Table. The organo-metallic compound is typically an organic compound of aluminium or of a metal of Group IIA of the Periodic Table or a complex of an organic compound of a metal of Group IA or IIA of the Periodic Table together with an organic aluminium compound. Thus, Component 2 of the catalyst system may be an organic magnesium compound such as, for example, a dihydrocarbyl magnesium compound, a hydrocarbyl magnesium halide compound or an alkoxy magnesium compound, preferably one containing an alkyl group in addition to an alkoxy group. Alternatively, a complex of a magnesium compound with an aluminium compound may be used, for example, a complex of a magnesium alkyl with an aluminium alkyl.

Component 2 may be a complex of a metal of Group IA with an organic aluminium compound, for example, a compound of the type lithium aluminium tetraalkyl.

Preferably Component 2 is an organic aluminium compound which may be, for example, an aluminium hydrocarbyl sulphate, or an aluminium hydrocarbyl hydrocarbyloxy or, more preferably, an aluminium hydrocarbyl halide such as a dihydrocarbyl aluminium halide or particularly preferred are aluminium trihydrocarbyl compounds or dihydrocarbyl aluminium hydrides. The especially preferred aluminium compounds are aluminium trialkyls particularly those in which the alkyl group contains from 2 up to 10 carbon atoms, for example, aluminium triethyl, aluminium tri-isobutyl and aluminium trioctyl.

The catalyst system may consist of only two components, particularly if the monomer being polymerised is ethylene or contains a substantial proportion of ethylene, for example, sufficient to give a polymer containing at least 70% by weight of ethylene. However, if Component 2 of the catalyst system is an aluminium trihydrocarbyl compound, and the catalyst system is to be used to polymerise a higher olefin monomer such as propylene, it is preferred that the catalyst system also includes a Lewis Base compound of the type disclosed herein as being suitable for use as a constituent of the particulate solid or in the production of a transition metal composition.

Particularly preferred Lewis Base compounds for use as a further component of the catalyst system are esters and organic silicon compounds such as the esters of carboxylic acids which contain an aromatic group such as, for example, ethyl benzoate, butyl benzoate, methyl p-methylbenzoate, ethyl p-methoxybenzoate, and ethyl phenylacetate, and also dialkyl phthalates and phenyl alkoxysilanes.

In addition to, or instead of, the Lewis Base compound which may be present as a further component of the catalyst system, there may also be present in the catalyst system a substituted or unsubstituted polyene, which may be an acylic polyene such as 3-methylheptatriene (1,4,6), or a cyclic polyene such as cyclooctatriene, cyclooctatetraene, or cycloheptatriene, or the alkyl- or alkoxy-substituted derivatives of such cyclic polyenes, or the tropylium salts or complexes, or tropolone or tropone.

The proportions of Components 1 and 2 of the catalyst system can be varied within a wide range as is well known to the skilled worker. The particular preferred proportions will be dependent on the type of materials used and the absolute concentrations of the components but, in general, we prefer that for each gramme atom of the transition metal which is present in Component 1 of the catalyst system there is present at least one mole of Component 2. The number of moles of Component 2 for each gramme atom of the transition metal in Component 1 may be as high as 1000 but conveniently does not exceed 500 and with some transition metal compositions may not be more than 25, for example, from 5 up to 10.

When the catalyst system includes a Lewis Base component as a further component of the catalyst system, it is preferred that this Lewis Base compound is present in an amount of not more than 1 mole for each mole of Component 2 and particularly in an amount of from 0.1 up to 0.5 moles of the Lewis Base compound for each mole of component 2. However, depending on the particular organic metal compound and Lewis Base compound, the proportion of the Lewis Base compound may need to be varied in order to achieve the optimum catalyst system.

If the catalyst system includes a polyene, it is preferred that the polyene is present in an amount of not more than 1 mole for each mole of Component 2, and especially from 0.01 up to 0.20 moles for each mole of Component 2. If the catalyst system includes both the Lewis Base component and the polyene, it is preferred that both of these materials are present together in an amount of not more than 1 mole for each mole of Component 2.

Catalyst systems in accordance with the present invention are suitable for the polymerisation and copolymerisation of unsaturated monomers, particularly ethylenically unsaturated hydrocarbon monomers such as the olefin monomers.

Thus, as a further aspect of the present invention, there is provided a process for the production of a polymer or copolymer of an unsaturated monomer wherein at least one ethylenically unsaturated hydrocarbon monomer is contacted under polymerisation conditions with a polymerisation catalyst as hereinbefore defined.

The monomer which may be contacted with the catalyst system is conveniently one having the following formula:-

$$CH_2=CHR^7$$

wherein $R^7$ is a hydrogen atom or a hydrocarbon radical.

Thus, the monomer may be ethylene, propylene, butene-1, pentene-1, hexene-1, 4-methylpentene-1, styrene, 1,3-butadiene or any other monomer which satisfies the foregoing formula. The monomer is preferably an olefin monomer, particularly an aliphatic mono-olefin monomer containing not more than 10 carbon atoms.

The monomers may be homopolymerised or may be copolymerised together. If propylene is copolymerised it is preferred to effect the copolymerisation with ethylene, conveniently using a sequential copolymerisation process as is described in British Patent Specifications 970 478 and 970 479. Specifically, propylene is polymerised in the essential absence of any other monomers and then a mixture of ethylene and propylene is polymerised to produce a polymeric material which contains from 2 up to 30% by weight of ethylene. If ethylene is being copolymerised using the process of the present invention, it is preferred to carry out the copolymerisation using a mixture of ethylene and the desired comonomer, for example butene-1 or hexene-1, wherein the mixture of monomers has essentially the same composition throughout the polymerisation process.

Component 1) of the catalyst may be mixed with the other component, or components, of the catalyst in the presence of the olefin monomer. If the catalyst includes a Lewis Base compound, it is preferred to premix the organic metal compound which is component 2) with the Lewis Base compound and then to mix this pre-mixture with the reaction product which is component 1).

As is well known, Ziegler-Natta type catalysts are susceptible to the presence of impurities in the polymerisation system. Accordingly, it is desirable to effect the polymerisation using a monomer, and a diluent if this is being used, which has a high degree of purity, for example a monomer which contains less than 5 ppm by weight of water and less than 1 ppm by weight of oxygen. Materials having a high degree of purity can be obtained by processes such as those described in British Patent Specifications 1 111 493; 1 226 659 and 1 383 611.

Polymerisation can be carried out in the known manner, for example in the presence or absence of an inert diluent such as a suitably purified paraffinic hydrocarbon, in the liquid phase using an excess of the liquid monomer as the polymerisation medium or in gas phase, this latter term being used herein to mean the essential absence of a liquid medium.

If polymerisation is effected in gas phase, it may be effected by introducing the monomer, for example propylene, into the polymerisation vessel as a liquid and operating with conditions of temperature and pressure within the polymerisation vessel which is such that the liquid monomer vaporises, thereby giving an evaporative cooling effect, and essentially all of the polymerisation occurs with a gaseous monomer. Polymerisation in gas phase may be effected using conditions which are such that the monomer is at a temperature and partial pressure which are close to the dew point temperature and pressure for that monomer, for example as described in more detail in British Patent Specification 1 532 445. Polymerisation in gas phase can be effected using any such technique suitable for effecting a gas-solid reaction such as a fluidised-bed reactor system, a stirred-bed reactor system or a ribbon blender type of reactor.

Using the catalyst systems of the present invention, ethylene may be polymerised or copolymerised, for example with butene-1 as the comonomer, in a fluidised-bed reactor system to give a high yield of polymer. The fluidising gas is the gas mixture to be polymerised together with any hydrogen which is present as a chain transfer agent to control molecular weight. Thus, for the copolymerisation of ethylene and butene-1 to produce an ethylene copolymer having a density of less than about 940 kg/$m^3$, the gas composition is typically from 50 to 60 mole % ethylene, 15 to 20 mole % butene-1 with the remainder, apart from inert materials and impurities, being hydrogen.

Polymerisation may be effected either in a batch manner or on a continuous basis, and the catalyst components may be introduced into the polymerisation vessel separately or all the catalyst components may be mixed together before being introduced into the polymerisation reactor. If all of the catalyst components are pre-mixed, this pre-mixing is preferably effected in the presence of a monomer and such pre-mixing will result in at least some polymerisation of this monomer before the catalyst system is introduced into the polymerisation vessel. If the polymerisation is being carried out in the gas phase, the catalyst components may be added to the polymerisation reactor suspended in a stream of the gaseous monomer or monomer mixture.

The polymerisation can be effected in the presence of a chain transfer agent such a hydrogen or a zinc dialkyl, in order to control the molecular weight of the product formed. If hydrogen is used as the chain transfer agent in the polymerisation of propylene, it is conveniently used in an amount of from 0.1 up to 5.0%, particularly from 0.05 up to 2.0% molar relative to the monomer. When the monomer being polymerised is ethylene, or a mixture in which ethylene is a major polymerisable component (by moles), the amount of hydrogen used may be greater, for example, in the homopolymerisation of ethylene the reaction mixture may contain in excess of 50% molar of hydrogen, whereas if ethylene is being copolymerised, a proportion of hydrogen which is typically up to 35% molar is used. The amount of chain transfer agent will be dependent on the polymerisation conditions, especially the temperature, which, at polymerisation pressures not exceeding 50 kg/$cm^2$, is typically in the range from 20°C up to 100°C, preferably from 50°C up to 85°C.

Polymerisation can be effected at any pressure which has been previously proposed for effecting the polymerisation of monomers such as olefin monomers. However, although the polymerisation may be effected at pressures up to 3000

$kg/cm^2m$, at which pressures the polymerisation temperature may be as high as 300°C, it is preferred to carry out the polymerisation at relatively low pressures and temperatures. Whilst the polymerisation may be effected at atmospheric pressure, it is preferred to use a slightly elevated pressure and thus it is preferred that the polymerisation is effected at a pressure of from 1 $kg/cm^2$ up to 50 $kg/cm^2$, preferably from 5 up to 30 $kg/cm^2$. The polymerisation temperature is preferably above ambient temperature and typically will not exceed 100°C.

The polymers obtained by the polymerisation process of the present invention may be obtained with a particle form which replicates, to at least some extent, the particle form of the particulate solid.

The particles which are essentially spherical, have an average diameter of at least one millimetre and have a porosity of at least 0.2 $cm^3/g$. Preferred polymers have an average particle diameter of at least 1.2 millimetres and especially at least 1.5 millimetres. The porosity of the polymer particles can be detemined by mercury porosity. Preferred polymers have a porosity of at least 0.25 $cm^3/g$.

The porous polymer particles can absorb a substantial proportion of a liquid additive and still remain as a free flowing powder. Thus, the polymers are suitable for the production of a free flowing powder masterbatch of the polymer with a liquid additive. The polymer particles may absorb between 20 and 35% by weight of the weight of the total material of a liquid additive and still show few signs of agglomeration.

The incorporation of additives with good dispersion is very difficult if the polymer particles are very dense, that is if they lack porosity. Under those conditions the segregation of additives becomes a problem.

Porous polymer particles avoid this problem. By choosing an appropriate blend of additives in a liquid form it is possible to treat all the polymer produced and so avoid the need to use the energy intensive blending step commonly used with current propylene polymers.

We have found that polymers having a large particle size and high porosity are conveniently obtained when the magnesium compound is magnesium diethoxide. Using other magnesium compounds, large particle size and high porosity polymer particles are less readily obtained.

The particulate solid of the present invention can be obtained using a spray drying technique. Suitable spray drying apparatus is illustrated diagrammatically in Figures 1 and 2 of European Patent Specification No 72,128.

Other alternative arrangements and spray-drying techniques will be apparent to the skilled worker and may be used without departing from the scope of the present invention as defined herein.

Various aspects of the present invention will now be described with reference to the following Examples which are illustrative of the invention. In the Examples, all operations are effected under an atmosphere of nitrogen unless otherwise indicated. All the glass apparatus was dried in an air oven at 120°C for at least one hour and purged with nitrogen before use.

**EXAMPLE 1**

**A) <u>Milling Magnesium diethoxide and toluene</u>**

A Siebtechnik SM 6 Vibromill chamber having a total usable volume of about 1.5 $dm^3$ and containing 180 stainless steel balls of 25 mm diameter was sealed, evacuated to a pressure of 0.3 x $10^{-3}$ $kg/cm^2$ and purged with nitrogen to give a nitrogen atmosphere in the mill. Water at ambient temperature was passed through the jacket of the mill and the mill was vibrated at a frequency of 1500 oscillations per minute and an amplitude of 2 mm. 182 grammes of essentially anhydrous magnesium diethoxide (obtainable from Dynamit Nobel) were incorporated into the mill chamber whilst the mill was being vibrated. After the addition of the magnesium diethoxide the mill was vibrated for about 15 minutes and 500 $cm^3$ of toluene were then added to the vibrating mill over a period of about 5 minutes. The mill was then vibrated for a further 48 hours whilst continuing to pass the of water at ambient temperature through the jacket of the mill.

After 48 hours, the mill was inverted, the inverted mill was vibrated and the milled mangesium ethoxide-toluene mixture was collected under nitrogen. The mill chamber was washed out with 800 $cm^3$ of toluene which was added to the suspension previously removed.

To the milled mixture, which was being stirred, was added a 10% weight/volume solution of polystyrene ("Styron" 686/7 - available from Dow Chemical Company) in toluene to provide 3% by weight of polystyrene relative to the magnesium diethoxide.

After standing overnight, the mixture had set solid and it was necessary to add a further quantity of toluene, and to agitate the mixture, in order to resuspend the solid particles. The diluted mixture had a solid content of about 15% by weight.

**B) <u>Spray drying magnesium diethoxide-toluene suspension</u>**

All of the suspension obtained in step A) was spray-dried using a glass laboratory scale spray drying apparatus similar to that illustrated in Figure 1 of European patent specification no 72128. The spray drying apparatus had a diameter of 15 cm and a length of 0.7 metres, the conical section 3 was replaced by a generally hemispherical bottom section, the conduit 12 was omitted, the valve 14 in the conduit 13 was omitted and the conduit 13 was connected directly to a cyclone provided with a catch-pot in which the solid material was collected. The spray nozzle used was a 1/4 JAU Automatic Air Atomizing Nozzle obtained from Spraying Systems Co of the USA and having a 0.72 mm diameter nozzle.

Spraying was effected under nitrogen by passing a stream of nitrogen, preheated to a temperature of 140 to 150°C, through conduit 11 at a rate of 170 to 180 $dm^3$/minute. Nitrogen at a pressure of about 1.4 $kg/cm^2$ absolute was introduced into the spray nozzle. The suspension obtained in step B) was fed from a stirred storage flask to the spray nozzle by the application of an excess nitrogen pressure of 0.25 $kg/cm^2$ to the storage flask.

**EXAMPLE 2**

10 kg of magnesium di-n-propoxide was milled for 5 hrs with 23 kg of anhydrous toluene in a Siebtechnik SM50 Vibro Mill chamber having a total usable volume of about 50 $dm^3$ and containing 8500 steel balls of diameter 25 mm at a frequency of 1500 oscillations per minute and an amplitude of 2mm. Prior to spray drying, 300g of polystyrene were dissolved in the suspension removed from the mill. All of the suspension obtained from the milling was spray-dried using a glass intermediate scale spray drying apparatus similar to that illustrated in Figure 1 of European patent specification no 72128. The spray drying apparatus had a diameter of 450 mm and a length of 1.03 metres, and was otherwise generally as used in Example 1. The spray nozzle used was a $\frac{1}{4}$ JAU Automatic Air Atomizing Nozzle obtained from Spraying systems Co of the USA and having a fluid cap 35100 in conjunction with an air cap 120.

Spraying was effected under nitrogen by passing a stream of nitrogen preheated to a temperature of 142°C through conduit 11 of the apparatus of Figure 1 of European patent specification No 72128 at a rate of 55 $m^3$/hr. Nitrogen at a pressure of 3.1 $Kg/cm^2$ absolute was introduced into the nozzle. The suspension obtained from the mill was fed from a pressured storage vessel maintained at 4.2 $Kg/cm^2$ absolute.

**EXAMPLE** 3

10 Kg of magnesium di-benzoate was milled for 3 hrs with 20Kg of anhydrous toluene and 350 g of polystyrene in a vibration mill as described in Example 2.

All of the suspension obtained from the milling was spray dried using the spray drying equipment described in Example 2.

Spray drying was effected under nitrogen by passing a stream of nitrogen preheated to a temperature of 124°C through conduit 11 of the apparatus of Figure 1 of European patent specification No 72128 at a rate of 55$m^3$/hr. Nitrogen at a pressure of 2.4 $Kg/cm^2$ absolute was introduced into the nozzle. The suspension obtained from the mill was fed from a pressurised storage vessel maintained at 1.6$Kg/cm^2$ absolute.

**COMPARATIVE EXAMPLE A**

The procedure of Example 1 was repeated using 207 grammes of essentially anhydrous magnesium chloride (Norsk Hydro) in place of the magnesium diethoxide used in Example 1. The spray drier nozzle blocked up frequently. Only a minor amount of spray dried product was obtained. Particle size measurement showed that the magnesium chloride had not broken down sufficiently to allow the slurry to spray dry effectively.

**COMPARATIVE EXAMPLE B**

The procedure of Example 1 was repeated using 178 g of essentially anhydrous magnesium chloride (Norsk Hydro) and 100 g of di-iso-octyl phthalate (BDH technical grade).

**COMPARATIVE EXAMPLE C**

330g of anhydrous magnesium chloride (Norsk Hydro) was milled for 48 hrs in the presence of di-n-heptyl phthalate (DnHP) in the mole ratio of magnesium chloride : DnHP of 7:1. Milling was effected in a vibratom ball mill as described in Example 1 in the absence of added toluene.

800 g of anhydrous toluene containing 10.5 g of polystyrene were then added to the mill and milling was continued for a further 48 hours.

Slurry removed from the mill was spray dried using the spray drying apparatus and conditions described in Example 1.

The products of Examples 1 to 3, and Comparative Example C were subjected to surface area measurements using the technique of BS 4359/1. The results are given in Table 1.

Table 1

| Solid Type (a) | Surface area ($m^2/g$) |
|---|---|
| ME | 10 |
| 1 | 67.5 |
| MP | 12.5 |
| 2 | 55.2 |
| 3 | 17.3 |
| MC | 3.5 |
| C | 10 |

Notes to Table 1
a) ME is magnesium diethoxide as supplied.
1 is the product of Example 1.
MP is magnesium dipropoxide as supplied.
2 is the product of Example 2.
3 is the product of Example 3.
MC is magnesium chloride as supplied.
C is the product of Comparative Example C.

The porosity of some of the particulate solids was determined by shaking a known quantity of the solid with a known amount of ethanol, and adding additional quantities of the ethanol until the solid powder starts to stick together. The results are given in Table 2.

Table 2

| Solid Type (a) | Ethanol absorbed ($cm^3/g$) |
|---|---|
| ME | 0.29 |
| 1 | 0.98 |
| MP | 0.52 |
| 2 | 1.36 |
| 3 | 0.95 |

Notes to Table 2
(a) is as defined in Notes to Table 1.

The products of Examples 1, 2 and 3 consisted of essentially spherical particles having a surface area of greater than 15 $m^2/g$ and a porosity corresponding to the ability to absorb at least 0.6 $cm^3$ of ethanol per gramme of solid. In contrast to this, spray dried magnesium chloride had a surface area of less than 10 $m^2/g$.

Table 3 sets out the particle size distributions of the products of Example 1 and of Comparative Example B before and after spray drying using a MALVERN ST-1800 particle size analyser.

Table 3

| Size Range (micrometres | Ex 1 | | COMPARATIVE Ex B | |
|---|---|---|---|---|
| | % w/w Before | % w/w After | % w/w Before | % w/w After |
| > 200 | NIL | NIL | Nil | 2.5 |
| 200 - 100 | NIL | 3.5 | Nil | 15.5 |
| 100 - 50 | NIL | 49.5 | Nil | 39.0 |
| 50 - 25 | NIL | 31.0 | Nil | 25.5 |
| 25 - 10 | NIL | 13.5 | Nil | 13.0 |
| 10 -7.5 | NIL | 2 | Nil | 3.5 |
| 7.5 - 5 | NIL | 1 | Nil | 1.0 |
| 5 - 1 | NIL | Nil | Nil | Nil |
| < 1 | 100 | Nil | 100 | Nil |

The products of Examples 1, 2 and 3, and also the product of Comparative Examples B and C were treated with titanium tetrachloride.

**A) <u>Examples 4 to</u> <u>6 Contacting with titanium tetrachloride</u>**

A sample (33 grammes) of the product of one of Examples 1 to 3 was transferred to a 2.0 $dm^3$ jacketted glass vessel which was provided with a stirrer. 0.495 $dm^3$ of titanium tetrachloride and 0.244 $dm^3$ of a pentamethylheptane hydrocarbon fraction with a boiling point of 180°C at atmospheric pressure (hereinafter called "the hydrocarbon fraction") was added to the vessel, the stirrer was started and heating was applied to the jacket. Heating was continued until a temperature of 100°C was attained. 16.5 $cm^3$ of di-iso-octyl phthalate were slowly added with stirring and the temperature was raised to 120°C and stirring was continued for 1 hour. At the end of 1 hour the stirrer was stopped and the solid was allowed to settle whilst continuing to heat the contents of the vessel. After 10 minutes settling time the supernatant liquid was syphoned off from the settled solid.

The contacting with titanium tetrachloride was immediately repeated by adding 0.495 $dm^3$ of titanium tetrachloride to the residue remaining from the previous contacting and the resulting slurry was stirred at 120°C for 1 hour. At the end of 1 hour the stirrer was stopped and the solid phase was allowed to settle whilst continuing to heat the contents of the vessel.

**B) <u>Washing</u>**

To the residue remaining from stage A was added a sufficient quantity of the hydrocarbon fraction at ambient temperature to give a total volume of 1.5 $dm^3$. The mixture was stirred and heated up to 120°C. Stirring at temperature was continued for 15 minutes and then ceased.

After a further 10 minutes the supernatent liquor was syphoned off from the settled solid whilst still heating. A further quantity of the hydrocarbon fraction was added to the settled solid to give a total volume of 1.5 $dm^3$ and this wash procedure was repeated a further two times at a temperature of 120°C. Finally two further washes with the hydrocarbon fraction were carried out without heating.

The cold residue remaining from the final washing step was diluted with the hydrocarbon fraction to give a final volume of 0.4 $dm^3$ and the mixture was transferred to a storage vessel under nitrogen.

**<u>Comparative Example D</u>**

The procedure of Examples 4 to 6 was repeated using the product of Comparative Example B with the exception that in stage A no addition of di-iso-octyl phthalate was effected.

**<u>Comparative Example E</u>**

A) <u>Contacting with titanium tetrachloride</u>

24 g of product of Comparative Example C was transferred to a 2.0 $dm^3$ jacketted glass vessel which was provided with a stirrer. 0.24 $dm^3$ of titanium tetrachloride and 0.24 $dm^3$ of the hydrocarbon fraction were added to the vessel, the stirrer was started and the vessel contents were heated to 120°C and maintained at that temperature for 2 hours. At the end of two hours the stirrer was stopped and the solid was allowed to settle whilst continuing to heat the contents of the vessel. After 20 minutes the supernatant liquid was syphoned off from the settled solid.

B) <u>Washing</u>

To the residue remaining from stage A was added a sufficient volume of the hydrocarbon fraction at ambient temperature to give a total volume of 0.48 $dm^3$. The mixture was stirred and heated up to 120°C. Stirring at 120°C was continued for 15 minutes and then ceased.

After a further 10 minutes the supernatant liquor was syphoned off from the settled solid whilst still heating. A further quantity of the hydrocarbon fraction was added to the settled solid to give a total volume of 0.48 $dm^3$ and this wash procedure was repeated a further two times at a temperature of 120°C. Finally three further washes with the hydrocarbon fraction were carried out at 60°C.

The residue remaining from the final washing step was diluted with the hydrocarbon fraction to give a final volume of 0.4 $dm^3$ and the mixture was transferred to a storage vessel under nitrogen.

**Examples 7 to 9 and Comparative Examples F and G**

The products of Examples 4 to 6 and Comparative Examples D and E were used to effect the polymerisation of propylene in liquid propylene.

**Method of polymerisation**

An 8 $dm^3$ pressure vessel equipped with a cooling/heating jacket and an agitator was evacuated at ambient temperature. The vacuum was released by admitting propylene gas until a pressure just above atmospheric pressure was attained. This procedure was repeated three times to ensure that the vessel was thoroughly purged.

To this vessel containing propylene at just above atmospheric pressure was added 10 m moles of triethyl aluminium, 1m mole of diphenyl dimethoxysilane and 50 mg of the product of one of Examples 4 to 6 or Comparative Examples D and E as a 10% weight/volume slurry in the hydrocarbon fraction. 5 $dm^3$ of liquid propylene was then added and agitation was commenced. The contents of the vessel were heated to 70°C and maintained at this temperature for 1.5 hours.

At the end of 1.5 hours, the liquid propylene remaining in the vessel was gradually vented to atmosphere. The vessel contents were purged with nitrogen before collecting and drying the polymer product.

The results obtained are set out in Table 4.

Table 4

| Ex | Ti | Compn | Polymer Properties | | | | | | |
|---|---|---|---|---|---|---|---|---|---|
| | Type(b) | Amount ($cm^3$) (c) | MFI (d) | FM (e) | Ti (f) | Al (f) | Cl (f) | Mg (f) | PD (h) |
| 7 | 4 | 0.5 | 45.5 | 1.52 | 1.4 | 242 | 24.3 | 9.9 | 364 |
| 8 | 5 | 0.5 | 71.0 | 1.66 | 2.5 | 475 | 55.5 | 13.9 | 371 |
| 9 | 6 | 0.5 | 3.4 | 1.32 | 11.4 | 672 | 57.5 | 19.1 | ND |
| F | D | 0.5 | ND | ND | ND | ND | ND | ND | ND |
| G | E | 0.5 | 11.2 | 1.48 | 1.0 | 115 | 18.5 | 7.8 | 380 |

Notes to Table 4

(b) Type refers to the Example in which the production of the titanium composition is described.

(c) Amount is the volume of suspension added.

(d) MFI is the melt flow index measured by ASTM Test Method D1238/70, Condition N (190°C and 10 kg)

(e) FM is the flexural modulus expressed in $GN/m^2$.

The flexural modulus was measured using a cantilever beam apparatus as described in Polymer Age, March 1970, pages 57 and 58. The deformation of a test strip a 1% skin strain after 60 seconds at 23°C and 50% relative humidity was measured. The test strip, which had dimensions of approximately 150 x 19 x 1.6 mm, was prepared in the following manner.

23 g of the polymer were mixed with 0.1% by weight of an antioxidant ('Topanol' CA), and the mixture was added to a Brabender Plasticiser, at 190°C, 30 rpm and under a load of 10 kg to convert it to a crepe. The crepe was placed within a template, between aluminium foil and pressed by means of an electric Tangye press at a temperature 250°C. The pressing was pre-heated for a period of 6 minutes, under just enough pressure to make the polymer flow across the template, that is an applied force of about 1 tonne. After the pre-heat period, the applied force was raised to 15 tonnes in 5 tonne increments, degassing (that is releasing pressure) every 5 tonnes. After 2 minutes at 15 tonnes, the press was cooled by means of air and water for 10 minutes or until room temperature was reached. The plaque obtained was then cut into strips of dimensions 150 x 19 x 1.6 mm. Duplicate strips of each polymer were placed into an annealing oven at 130°C and after 2 hours at this temperature the heat was switched off and the oven cooled to ambient temperature at 15°C per hour.

(f) The titanium (Ti), aluminium (Al), chlorine (Cl) and magnesium (Mg) residues from the catalyst are given in parts per million by weight relative to the total polymer product (polymer + catalyst residues) and were measured by neutron activation analysis on dried polymer leaving the polymerisation vessel.

(h) PD is the bulk density, in $g/dm^3$ which is determined by introducing 10 grammes of the polymer powder into a 50 $cm^3$ flat-bottomed graduated tube of 2 cm internal diameter without compacting The volume occupied by the polymer powder was then determined.

Duplicate measurements are made.

ND means that this property was not determined for the polymer.

Some of the polymer products were subjected to particle size analysis by sieving and the results are set out in Table 5.

Table 5

| Particle size (microns) | % Weight retained | | | | |
|---|---|---|---|---|---|
| | Example 7 | Example 8 | Example 9 | Comp Example F | Comp Example G |
| > 2000 | 35.0 | 14.0 | 8.0 | NIL | 2.5 |
| 2000-1400 | 15.0 | 11.0 | 21.0 | NIL | 4.0 |
| 1400-1000 | 12.0 | 17.0 | 23.0 | NIL | 5.5 |
| 1000-850 | 4.0 | 7.0 | 10.0 | 17.5 | 5.0 |
| 850-500 | 11.0 | 8.0 | 28.0 | 17.5 | 25.0 |
| 500-425 | 3.0 | 15.0 | 5.0 | 5.0 | 7.0 |
| 425-300 | 6.0 | 9.0 | 3.0 | 12.0 | 16.0 |
| 300-212 | 6.0 | 6.0 | 2.0 | 9.5 | 13.0 |
| 212-125 | 5.0 | 5.0 | - | 24.0 | 14.0 |
| 125- 75 | - | - | - | 14.5 (125-75 and BASE combined) | - |
| BASE | 3.0 | 8.0 | NIL | | 8.0 |

## Example 10

Using the procedure outlined in Example 2, 10 Kg of anhydrous magnesium ethoxide (Dynamit Nobel) were milled for 8 hours with 300g of polystyrene and 20 kg of anhydrous toluene in a 50 $dm^3$ vibratom ball mill.

Spray drying of the milled mixture thus obtained was carried out using the procedures described in Example 2 to give particulate magnesium ethoxide composed of essentially spherial particles.

This particulate magnesium ethoxide was contacted with a transition metal chloride as follows.

To a 2 $dm^3$ agitated vessel equipped with a heating jacket was added 0.48 $dm^3$ of the hydrocarbon fraction and 0.48 $dm^3$ of titanium tetrachloride at ambient temperature. Agitation was commenced and 64g of the spray dried magnesium ethoxide was added to the liquid under nitrogen. The temperature was raised to 100°C and 32 $cm^3$ of di-isooctyl phthalate were added. The temperature was raised to 120°C and agitation was stopped after maintaining the reaction temperature of 120°C for 1 hour. After 10 minutes the supernatant liquor was syphoned free of the settled solid.

The contacting with titanium tetrachloride was immediately repeated by adding 0.48 $dm^3$ of titanium tetrachloride to the residue remaining from the previous contacting and the resulting slurry was stirred at 120°C for 1 hour. At the end of 1 hour the solid phase was allowed to settle and the supernatant liquor was syphoned off.

Six wash steps were carried out using the procedure of Examples 4 to 6. The first three washes were carried out at 120°C. The fourth wash was carried out at 68°C and the remaining two washes were carried out at ambient temperature.

## Example 11

The product of Example 10 was precontacted with triethyl aluminium and diphenyl dimethoxy silane in the presence of a small quantity of propylene at 20°C. The resulting slurry was fed continuously to a stirred reactor containing 24.5 Kg of propylene homopolymer which was maintained at 85°C and 32.5 Kg/$cm^2$ pressure. Propylene was passed through the polymer bed in the form of a continuous gas stream. Hydrogen was added to the reactor to maintain a polymer product melt flow index of 20 and the product production rate was maintained between 18-20 Kg/hour. Reaction conditions and polymerisation results are shown in Table 6.

By comparison a polymer product was obtained using the same polymerisation conditions and a catalyst system in which the support used was particulate magnesium chloride ethanolate obtained by cooling an emulsion of the molten ethanolate in an immiscible liquid to solidify the ethanolate particles as described in British Patent No 2024215.

The robustness of the ethoxide based polymer product was compared with polymer derived from the magnesium chloride ethanolate route by agitating the polymer (750 g) in a 3 $dm^3$ capacity Henschel mixer for 15 minutes at 3400 rpm. The results obtained are set out in Table 7.

Table 6

| Catalyst | REACTOR CONDITIONS | | | | | POLYMER PROPERTIES | | | | | | |
|---|---|---|---|---|---|---|---|---|---|---|---|---|
| | Temp (°C) | $AlEt_3$ Feed (mm/hr) | Silane Feed (mm/hr) | $\%H_2$ in propylene | Reactor dwell time (hrs) | MFI (d) | FM (e) | NMR Ratio (i) | % HHS (j) | Ti (f) | Cl (f) | Al (f) |
| Ethoxide | 85 | 30 | 3.7 | 0.25 | 1.3 | 21 | 1.52 | 1.76 | 1.7 | 2 | 43 | 128 |
| Ethanolate | 85 | 30 | 1.4 | NR | 1.4 | 28 | 1.72 | 1.90 | 1.7 | NR | 34 | 105 |

Notes to Table 6

(d) (e) and (f) are as defined in Notes to Table 4.

(i) This refers to a wide line nuclear magnetic resonance technique used to measure the relative proportions of mobile to immobile material in a sample of the solid polymer.

The technique relies on the fact that isotactic regions of the polymer are rigid enough to restrict dipolar interactions between nearest neighbour protons causing a broadening of the proton resonance which is measured over a range of 10 gauss.

In atatic regions molecular motion is less retricted and some averaging of the dipolar intentions will occur resulting in a reduction of the line width which can be measured over a range of 0.5 gauss.

The ratio of the 10 to 0.5 gauss resonances (measured on a Newport Analyser) is taken to represent the relative proportions of isotactic to atactic polymer.

(j) HHS is the proportion by weight of the polymer which is soluble in boiling heptane as determined from the weight loss of a sample of polymer after Soxhlet extraction with the heptane for 24 hours.

Table 7

| Particle size (microns) | % Weight retained | | | |
|---|---|---|---|---|
| | Example 11 | | Ethanolate | |
| | Before | After | Before | After |
| > 2800 | 6.0 | 3.0 | 11.0 | 2.0 |
| 2800 - 2000 | 11.0 | 10.0 | 20.0 | 3.0 |
| 2000 - 1400 | 19.0 | 18.0 | 30.0 | 21.0 |
| 1400 - 1000 | 22.0 | 20.5 | 24.0 | 39.0 |
| 1000 - 500 | 18.0 | 18.5 | 13.0 | 31.0 |
| 500 - 300 | 21.0 | 25.0 | 2.0 | 3.0 |
| 300 - 212 | 2.5 | 3.0 | NIL | 1.0 |
| BASE | 0.5 | 2.0 | NIL | NIL |
| Average | 1100 | 1000 | 1600 | 1300 |

It will be observed that there is little change in the particle size distribution and average particle size of the polymer product of Example 11 whereas the polymer obtained using the ethanolate shows an appeciable change both in particle size distribution and average particle size. Thus, the ethoxide based polymer is more robust than that obtained using an ethanolate support.

The ethoxide based polymer obtained under gas phase conditions as described in Example 11 was subjected to a determination of its ability to absorb a liquid without agglomerating. 50 g of the polymer which had been sieved into the size range 1 - 2 mm was mixed with 16.7 g of bis (t-butylperoxyisopropyl) benzene in a rotary evaporator at 70°C and a pressure of less than 5 mm of mercury. Nitrogen was introduced into the evaporator whilst still hot to raise the pressure to ambient pressure. The product obtained on cooling was a free flowing powder which contained 25% by weight of the peroxide compound. The procedure was repeated using larger quantities of the peroxide compound and it was found that the polymer remained free flowing when containing 30% by weight of the peroxide compound but when containing 33% by weight of the peroxide compound some polymer agglomeration occured.

In contrast to this, the polymer obtained using the ethanolate supported catalyst, started to agglomerate when containing about 10% by weight of the peroxide compound.

**Example 12**

Using the milling and spray drying procedures outlined in Example 10, 65 kg of a magnesium ethoxide support were obtained in spherical form. This material was slurried in 600 $dm^3$ of the hydrocarbon fraction and added to 975 $dm^3$ of titanium tetrachloride at ambient temperature in an agitated vessel. 300 $dm^3$ of the hydrocarbon fraction were used to wash the catalyst support charge vessel free of its heel of magnesium ethoxide into the reactor. The resulting agitated slurry was heated to 95°C and 26 $dm^3$ of di-iso-octyl phthalate were slowly added. The temperature was raised to 115°C and maintained at this temperature for 35 minutes.

Whilst still heating at 115°C the agitator was stopped and the solid phase was allowed to settle. After one hour the supernatant liquor was syphoned off over a further one hour whilst continuing to maintain the temperature at 115°C.

A further 975 $dm^3$ of titanium tetrachloride were then charged to the settled bed of solid and stirring was recommenced. The temperature was again raised to 115°C and maintained for 35 minutes. The agitator was stopped and the solid phase allowed to settle over a one hour period whilst maintaining the temperature at 115°C. The supernatant liquor was syphoned off over a further one hour period.

The settled solid was subjected to 5 x 3000 $dm^3$ washes with the hydrocarbon fraction using one hour settling and one hour syphoning times. The first two washes were carried out at 115°C. The third, fourth and final washes were carried out at 100°C, 80°C and 60°C repectively.

The catalyst slurry derived from the final wash step was used to effect polymerisation in a gas phase continuous polymerisation reactor under similar conditions to those described in Example 11 (see Table 6 for reaction conditions).

The polymer derived from the gas phase propylene homopolymerisation was sieved and each fraction analysed for residual chlorine.

By comparison a polymer product obtained using the same polymerisation conditions from a catalyst system in which the support was particulate magnesium chloride ethanolate obtained by a method described in Example 10, was also sieved and each fraction analysed for chloride ion residue level.

The results obtained are set out in Table 8.

Table 8

| ETHOXIDE | | | ETHANOLATE | | |
|---|---|---|---|---|---|
| Particle Size (microns) | % wt retained | ppmCl in fraction | particle size (microns) | % wt retained | ppmCl in fraction |
| 4000 - 2800 | 10 | 21.8 | 4000-28000 | 7.9 | 27.3 |
| 2800-2000 | 18 | 21.8 | 2800-2000 | 19.1 | 27.1 |
| 2000-1400 | 22.5 | 26.7 | 2000-1400 | 28.7 | 28.7 |
| 1400- 710 | 16.5 | 30.4 | 1400-1000 | 23.7 | 34.1 |
| 710- 425 | 17 | 30.9 | 1000- 710 | 11.4 | 42.0 |
| 425- 212 | 10.5 | 39.4 | 710- 425 | 5.3 | 56.5 |
| 212 | 3 | 51.9 | 425 | 1.4 | 92.2 |

The results indicate that in the case of polymer derived from the particulate magnesium ethoxide support the residual chorine level is more evenly distributed throughout the range of spherical polymer particle sizes.

**EXAMPLE 13 TO 27**

A series of millings were carried out on a Siebtecnik 50 $dm^3$ Vibratom ball mill using anhydrous magnesium ethoxide (Dynamit Nobel), polystyrene and anhydrous toluene. The milling conditions are shown in Table 9.

Table 9

| Milled Product | Milling Time (hours) | Milling Temp (°C) | Wt | | |
|---|---|---|---|---|---|
| | | | Toluene (Kg) | Mg (OEt) (Kg) | Polystyrene (g) |
| M1 | 9 | 30 | 20 | 10 | 300 |
| M2 | 9 | 30 | 16.4 | 10 | 300 |
| M3 | 9 | 30 | 23 | 15 | 460 |
| M4 | 9 | 30 | 24 | 16 | 480 |

The liquid slurry discharged from the mill after each milling was spray dried under different conditions using the spray drying apparatus described in Example 2.

The spray dried products from each of the spraying experiments were found to be spherical in form. The particle size distributions of each of the spray dried products was measured from a dilute slurry in the hydrocarbon fraction by a MALVERN ST - 1800 particle size analyser.

The spray drying conditions, the average particle size of the spray dried product and the weight percentage of particles of less than 25 micrometres in diameter are set out in TABLE 10.

Table 10

| Ex | Milling Product | Spray Nozzle Assembly (i) | SPRAY DRYING CONDITIONS: Drying $N_2$ Feed Rate | Drying $N_2$ In Temp (°C) | Drying $N_2$ Out Temp (°C) | Slurry Feed Rate (Kg/hr) | Slurry Feed Pressure (Kg/cm$^2$) (gauge) | Atomiser $N_2$ Pressure (Kg/cm$^2$) (gauge) | Spray Product Size: Mean Size (um) | % w/w (25 um) |
|---|---|---|---|---|---|---|---|---|---|---|
| 13 | M1 | 35100 120 | 58 | 122 | 49 | 2.5 | 1.58 | 2.81 | 56 | 12.5 |
| 14 | M1 | " | 58 | 123 | 49 | 2.5 | 1.58 | 2.11 | 66 | 10.5 |
| 15 | M1 | " | 58 | 123 | 44 | 2.5 | 1.58 | 1.41 | 76 | 8.5 |
| 16 | M1 | " | 58 | 123 | 44 | 2.5 | 1.58 | 1.76 | 64 | 10 |
| 17 | M1 | " | 58 | 123 | 41 | 2.5 | 1.58 | 2.11 | 64 | 9.5 |
| 18 | M1 | " | 58 | 122 | 44 | 2.4 | 1.58 | 2.11 | 70 | 8.5 |
| 19 | M2 | " | 58 | 122 | 45 | 7.8 | 3.52 | 2.11 | 96 | 3.5 |
| 20 | M2 | " | 58 | 122 | 44 | 3.0 | 2.25 | 2.11 | 65 | 10 |
| 21 | M3 | " | 56 | 128 | 50 | 3.2 | 2.11 | 2.11 | 78 | 6 |
| 22 | M4 | 35100 1401110 | 56 | 142 | 46 | 2.24 | 3.52 | 1.41 | 45 | 26 |
| 23 | M4 | " | 56 | 142 | 46 | 1.94 | 3.52 | 2.11 | " | 20 |
| 24 | M4 | " | 56 | 142 | 46 | 3.14 | 3.52 | 3.52 | " | 19 |
| 25 | M4 | 35100 122435 | 56 | 143 | 47 | 1.40 | 2.11 | 2.11 | 25 | 50 |
| 26 | M4 | 2850 70 | 56 | 143 | 48 | 3.30 | 2.81 | 2.11 | 55 | 15.5 |
| 27 | M4 | " | 56 | 143 | 48 | 2.60 | 2.11 | 2.11 | 20 | 60 |

Notes to Table 10

(k) The numbers 2850 and 35100 refer to the sizes of the fluid caps through which slurry from the mill is fed, normally either via a syphon spray set up or by subjecting the slurry to a slight over pressure.

The numbers 70, 120, 1401110 and 122435 refer to the types of air cap in which nitrogen and slurry are mixed prior to forming the spray pattern.

Air caps 70 and 120 provide a full round spray pattern in combination with either a syphon or slight over pressure spray set up.
Air cap 122435 provides a flat spray pattern from a syphon or slight overpressure spray assembly.
Air cap 1401110 provides a full round spray pattern from a spray assembly which substantially overpressures the slurry feed.

The code numbers referred to can be found in SPRAYING SYSTEMS CO INDUSTRIAL CATALOG 27. (Spray nozzles and accessories).

Spray dried spherical support with the largest mean size and the smallest percentage of material less than 25 microns in diameter was obtained spraying by through a nozzle assembly composed of a 35100 fluid cap in combination with a 120 air cap. This combination gave a full round spray pattern. Air cap variations on the 35100 fluid cap, that is with 1401110 pressure cap and 122435 flat spray cap produced substantially inferior results.

Spray drying using a smaller nozzle assembly, that is the 2850 fluid cap in combination with the 70 full round spray pattern type air cap also proved inferior in terms of mean particle size and distribution.

The influence of the slurry feed rate which can be altered by varying the overpressure and the influence of the nitrogen atomiser pressure on the spray product mean size can be seen from Figure 1.

From Figure 1 it can be seen that an increase in nitrogen atomiser pressure at a fixed slurry feed rate increases the shear force per unit volume of fluid and reduces spray droplet size.

An increase in slurry feed rate at a fixed nitrogen atomiser pressure reduces the shear force per unit volume of fluid and increases the spray droplet size.

**EXAMPLE 28**

To a representative sample of the slurry product M4 described in Examples 13 to 27 was added sufficient di-iso-octyl phthalate to produce a ratio of 0.25 kg di iso octyl phthalate per Kg of magnesium ethoxide. The resulting slurry was spray dried using the equipment described in Example 2 with a nozzle assembly comprising a 35100 fluid cap and a 120 air cap. The spray drying conditions were

| | |
|---|---|
| Drying nitrogen feed rate | 56 $m^3$/hr |
| Drying nitrogen inlet temp | 105°C |
| Drying nitrogen exit temp | 46°C |
| Slurry feed pressure | 0.98 kg/$cm^2$ (gauge) |
| Slurry feed rate | 6 kg/hr |
| Nitrogen atomiser pressure | 2.81 kg/$cm^2$ (gauge) |

The spray dried product was spherical in form. It had a mean size of 24 microns, and 53% of the product was less than 25 microns in size.

By referring to Figure 1 and Table 10 it can be seen that the addition of di-iso-octyl phthalate to the spray drier slurry feed has considerably reduced the spray product mean size and particle distribution.

**EXAMPLE 29**

A sample of magnesium ethoxide/toluene slurry obtained under the milling conditions described in Stage A of Example 1 was diluted with toluene and split into two portions. To one of these portions was added a 10% weight/volume solution of polystyrene in toluene to provide 3% by weight of polystyrene relative to the magnesium diethoxide.

Both portions of slurry were spray dried consecutively using the apparatus described in Stage B of Example 1 under identical conditions. The spray dried products from both spray dryings were slurried in the hydrocarbon fraction and subjected to particle size analysis on a MALVERN ST-1800 particle size analyser. The results are set out in Table 11.

Table 11

| PARTICLE SIZE (μm) | WITH POLYSTYRENE wt % RETAINED | WITHOUT POLYSTYRENE wt % RETAINED |
|---|---|---|
| > 200 | NIL | NIL |
| 200 -100 | NIL | NIL |

Table 11 (continued)

| PARTICLE SIZE (μm) | WITH POLYSTYRENE wt % RETAINED | WITHOUT POLYSTYRENE wt % RETAINED |
|---|---|---|
| 100 - 50 | 10.0 | NIL |
| 50 - 25 | 47.5 | 0.5 |
| 25 - 10 | 33.0 | 2.5 |
| 10 - 7.5 | 3.5 | 3.0 |
| 7.5 - 5 | 3.0 | 10 |
| 5 - 1 | 3.0 | 84.0 |
| < 1 | NIL | NIL |

Visual inspection of both spray dried products via a microscope showed that the spray dried product containing polystyrene was composed of spherical particles while the spray dried product prepared in the absence of polystyrene contained a mixture of spherical and fine irregularly shaped particles.

**EXAMPLE 30 to 35**

10Kg of magnesium diethoxide (Dynamit Nobel) was milled for 10 hrs with 23 Kg anhydrous toluene and 300 g polystyrene at a temperature of 30 - 35°C in a vibratom ball mill described in Example 2.

The liquid slurry removed from the mill was immediately spray dried using the spray drying equipment as described in Example 2.

Spraying was effected under nitrogen by passing a stream of nitrogen preheated to a temperature of 140-165°C through conduit 11 of the apparatus of Fig 1 of European patent specification no 72128 at a rate of 50-60 $m^3$/hr. Nitrogen at a pressure of 3.5 Kg/$cm^2$ absolute was introduced into the nozzle. The suspension obtained from the mill was fed from a pressurised storage vessel maintained at 2.3 Kg/$cm^2$ absolute at a rate of 10.3 Kg/hr.

The spray-dried product was converted into catalyst using apparatus and procedure as described in Examples 4 to 6. A series of catalyst preparations using the spray dried magnesium ethoxide were carried out in which the titanium tetrachloride concentration and the solids content of the slurry was varied.

The catalysts prepared were polymerised in liquid propylene as described for Examples 7 to 9.

Variations in the catalyst preparative conditions are set out in Table 12, together with the properties of the polymers. The reaction temperature for both titanium tetrachloride treatment stages was maintained at 95°C. At the end of the second titanium tetrachloride treatment stage, the settled solid was washed four times with hydrocarbon fraction at 95°C.

Table 12

| X | COMPONENTS ADDED TO 1st $TiCl_4$ Treatment Stage | | | | 2nd TiCl Treatment Stage | | POLYMER PROPERTIES | | | | |
|---|---|---|---|---|---|---|---|---|---|---|---|
| | Mg $(OEt)_2$ (g) | $TiCl_4$ ($cm^3$) | HF (l)($cm^3$) | DIOP (m)($cm^3$) | $TiCl_4$ ($cm^3$) | HF (k)($cm^3$) | Mean Particle Size (Microns) | % w/w Finer than 500 Microns | ppm Cl | ppm Mg | NMR (Ratio) (i) |
| 30 | 33 | 660 | 410 | 13 | 200 | 600 | 1250 | 11.0 | 28.4 | 10.0 | 1.29 |
| 31 | 33 | 330 | 210 | 13 | 200 | 600 | 1500 | 8.5 | 30.4 | 9.7 | 1.13 |
| 32 | 33 | 165 | 105 | 13 | 200 | 600 | 400 | 54.0 | 38.9 | 10.8 | 0.99 |
| 33 | 33 | 490 | 310 | 13 | 200 | 600 | 1400 | 10.0 | 30.4 | 10.3 | 1.34 |
| 34 | 33 | 490 | 310 | 13 | 495 | NIL | 1450 | 7.0 | 21.0 | 7.0 | 1.17 |
| 35 | 33 | 490 | NIL | 13 | 200 | 600 | 200 | 73.0 | 55.5 | 13.5 | 0.93 |

<u>Notes to Table 12</u>

(i) is as defined in Notes to Table 6.

(l) HF is hydrocarbon fraction, in $cm^3$

(m) DIOP is di-iso-octyl phthalate, in $cm^3$

From Table 12, the following three features of the catalyst preparation process can be seen to be of significance in terms of the characteristics of the catalyst and the polymer obtained from it.

1. A high solids concentration (Example 32) causes particle breakdown.
2. Neat titanium tetrachloride in the first treatment stage causes particle breakdown (Example 35). This result is not related to particle/particle interactions (compare Examples 35 and 31 which use similar solids concentrations)
3. Neat titanium tetrachloride in the second treatment stage decreases polymer fines formation and increases catalyst activity (Example 34).

## Claims

**1.** A particulate solid which is formed from a compound of the general formula:

$$Mg(OR)_XX_{(2-X)}$$

where

R is a group R' or COR', where R' is a hydrocarbyl group;
X is a halogen atom; and
x is from 1 up to and including 2,

the particles of the solid being essentially spherical and having a surface area of at least 15 $m^2 \cdot g^{-1}$.

**2.** A solid as claimed in claim 1 having a surface area of at least 50 $m^2 \cdot g^{-1}$ and formed from particles of a compound of the formula: $Mg(OR)_2$ - where R is alkyl containing at least two carbon atoms.

**3.** A solid as claimed in either claim 1 or claim 2 wherein R is ethyl.

**4.** A solid as claimed in any one of claims 1 to 3 which is capable of absorbing at least 0.6 $cm^3$ of ethanol per gramme of solid before the solid particles stick together.

**5.** As solid as claimed in any one of claims 1 to 4 which also includes at least one Lewis Base compound.

**6.** A solid as claimed in any one of claims 1 to 5 which also includes a minor proportion of an attrition inhibitor selected from the group consisting of polystyrene, polymethylmethacrylate, polyvinylacetate, atactic polypropylene or an AB block copolymer.

**7.** A particulate solid as claimed in any one of claims 1 to 6 including fewer than 10% of particles with a size of less than 10 μm.

**8.** A particulate solid as claimed in any one of claims 1 to 7 having an average particle size of from 40 to 80 μm.

**9.** A method of making a solid as claimed in any one of claims 1 to 8 which comprises suspending in an inert liquid medium a solid which is a compound of the general formula:

$$Mg(OR)_XX_{(2-X)}$$

where

R is a group R' or COR', where R' is a hydrocarbyl group;
X is a halogen atom; and
x is from 1 up to and including 2,

spray drying the suspension and collecting the spray dried solid.

**10.** A transition metal composition which is the reaction product of a transition metal compound of Group IVA, VA or VIA of the Periodic Table with a particulate solid as claimed in any one of claims 1 to 8 or made by the method of claim 9.

**11.** A composition as claimed in claim 10 which is the reaction product of titanium tetrachloride with a particulate solid as claimed in any one of claims 1 to 8 or made by the method of claim 9.

**12.** A method of making a transition metal composition which comprises reacting a particulate solid claimed in any one of claims 1 to 8 or made by the method of claim 9 with a transition metal compound of Group IVA, VA or VIA of the Periodic Table.

**13.** A method as claimed in claim 12 wherein the transition metal compound is titanium tetrachloride.

**14.** A method as claimed in either claim 12 or claim 13 wherein the reaction between the particulate solid and the transition metal compound takes place in the presence of at least one Lewis Base compound.

**15.** A polymerization catalyst which comprises:

1 a transition metal composition as claimed in claim 10 or or made by the method of either claim 12 or claim 13; and

2 an organic compound of a non-transition metal of Groups I to IV of the Periodic Table.

**16.** A catalyst as claimed in claim 15 additionally including at least one Lewis Base compound.

**17.** A catalyst as claimed in either claim 15 or claim 16 wherein the organic compound is aluminium triethyl.

**18.** A method of making a polymer or copolymer of an unsaturated monomer wherein at least one ethylenically unsaturated hydrocarbon monomer is contacted under polymerization conditions with a polymerization catalyst as claimed in claims 15 to 17.

**19.** A method as claimed in claim 18 wherein the ethylenically unsaturated hydrocarbon monomer is propylene optionally in combination with ethylene.

**Patentansprüche**

**1.** Teilchenförmiger Feststoff, gebildet aus einer Verbindung der allgemeinen Formel:

$$Mg(OR)_X X_{(2-X)},$$

worin

R für einen Rest R' oder COR', wobei R' für einen Kohlenwasserstoffrest steht,
X für ein Halogenatom und
x für eine Zahl von 1 bis einschließlich 2 steht,

dessen Teilchen im wesentlichen kugelförmig sind und eine Oberfläche von mindestens 15 $m^2 \cdot g^{-1}$ aufweisen.

**2.** Feststoff nach Anspruch 1 mit einer Oberfläche von mindestens 50 $m^2 \cdot g^{-1}$ aus Teilchen einer Verbindung der Formel: $Mg(OR)_2$, worin R für einen Alkylrest mit mindestens zwei Kohlenstoffatomen steht.

**3.** Feststoff nach Anspruch 1 oder 2, worin R für Ethyl steht.

**4.** Feststoff nach einem der Ansprüche 1 bis 3, der mindestens 0,6 $cm^3$ Ethanol pro Gramm Feststoff absorbieren kann, bevor die Feststoffteilchen verkleben.

**5.** Feststoff nach einem der Ansprüche 1 bis 4, der außerdem noch mindestens eine Lewis-Base enthält.

**6.** Feststoff nach einem der Ansprüche 1 bis 5, der außerdem noch einen untergeordneten Anteil eines aus der Gruppe, bestehend aus Polystyrol, Polymethylmethacrylat, Polyvinylacetat, ataktischem Polypropylen oder einem AB-Blockcopolymerisat, ausgewählten Abriebinhibitors enthält.

**7.** Teilchenförmiger Feststoff nach einem der Ansprüche 1 bis 6, der unter 10% an Teilchen mit einer Größe unter 10 µm enthält.

**8.** Teilchenförmiger Feststoff nach einem der Ansprüche 1 bis 7 mit einer mittleren Teilchengröße von 40 bis 80 µm.

**9.** Verfahren zur Herstellung eines Feststoffs nach einem der Ansprüche 1 bis 8, bei dem man einen Feststoff, bei dem es sich um eine Verbindung der allgemeinen Formel:

$$Mg(OR)_X X_{(2-X)},$$

worin

R für einen Rest R' oder COR', wobei R' für einen Kohlenwasserstoffrest steht,
X für ein Halogenatom und
x für eine Zahl von 1 bis einschließlich 2 steht,

handelt, in einem inerten flüssigen Medium suspendiert, die Suspension sprühtrocknet und den sprühgetrockneten Feststoff isoliert.

**10.** Übergangsmetallzusammensetzung, bei der es sich um das Produkt der Umsetzung einer Übergangsmetallverbindung der Gruppe IVA, VA oder VIA des Periodensystems mit einem teilchenförmigen Feststoff nach einem der Ansprüche 1 bis 8 bzw. mit einem nach dem Verfahren gemäß Anspruch 9 hergestellten teilchenförmigen Feststoff handelt.

**11.** Zusammensetzung nach Anspruch 10, bei der es sich um das Produkt der Umsetzung von Titantetrachlorid mit einem teilchenförmigen Feststoff nach einem der Ansprüche 1 bis 8 bzw. mit einem nach dem Verfahren gemäß Anspruch 9 hergestellten teilchenförmigen Feststoff handelt.

**12.** Verfahren zur Herstellung einer Übergangsmetallzusammensetzung, bei dem man einen teilchenförmigen Feststoff nach einem der Ansprüche 1 bis 8 bzw. einen nach dem Verfahren gemäß Anspruch 9 hergestellten teilchenförmigen Feststoff mit einer Übergangsmetallverbindung der Gruppe IVA, VA oder VIA des Periodensystems umsetzt.

**13.** Verfahren nach Anspruch 12, bei dem man als Übergangsmetallverbindung Titantetrachlorid einsetzt.

**14.** Verfahren nach Anspruch 12 oder 13, bei dem man die Umsetzung des teilchenförmigen Feststoffs mit der Übergangsmetallverbindung in Gegenwart von mindestens einer Lewis-Base durchführt.

**15.** Polymerisationskatalysator aus:

1 einer Übergangsmetallverbindung nach Anspruch 10 bzw. einer nach dem Verfahren gemäß Anspruch 12 oder 13 hergestellten Übergangsmetallverbindung und
2 einer organischen Verbindung eines nicht zu den Übergangsmetallen gehörenden Metalls der Gruppen I bis IV des Periodensystems.

**16.** Katalysator nach Anspruch 15, der außerdem noch mindestens eine Lewis-Base enthält.

**17.** Katalysator nach Anspruch 15 oder 16, der als organische Verbindung Aluminiumtriethyl enthält.

**18.** Verfahren zur Herstellung eines Polymerisats oder Copolymerisats eines ungesättigten Monomers, bei dem man mindestens ein ethylenisch ungesättigtes Kohlenwasserstoffmonomer unter Polymerisationsbedingungen mit einem Polymerisationskatalysator nach den Ansprüchen 15 bis 17 in Berührung bringt.

19. Verfahren nach Anspruch 18, bei dem man als ethylenisch ungesättigtes Kohlenwasserstoffmonomer Propylen, gegebenenfalls zusammen mit Ethylen, einsetzt.

**Revendications**

1. Solide particulaire qui est formé d'un composé de formule générale

$$Mg(OR)_xX_{(2-x)}$$

dans laquelle

R est un groupement R' ou COR', R' étant un groupement hydrocarbyle,
X est un atome d'halogène, et
x a une valeur comprise entre 1 et 2 inclusivement,

les particules du solide étant essentiellement sphériques et ayant une surface spécifique de 15 $m^2.g^{-1}$ au moins.

2. Solide selon la revendication 1, ayant une surface spécifique de 50 $m^2.g^{-1}$ au moins, formé de particules d'un composé de formule $Mg(OR)_2$ - dans laquelle R est un groupement alkyle contenant au moins 2 atomes de carbone.

3. Solide selon la revendication 1 ou 2, dans lequel R est un groupement éthyle.

4. Solide selon l'une quelconque des revendications 1 à 3, capable d'absorber au moins 0,6 $cm^3$ d'éthanol par gramme de solide avant que les particules du solide ne s'agglutinent.

5. Solide selon l'une quelconque des revendications 1 à 4, contenant également au moins une base de Lewis.

6. Solide selon l'une quelconque des revendications 1 à 5, contenant également une faible proportion d'un inhibiteur d'usure par frottement, choisi dans le groupe constitué par le polystyrène, le polyméthacrylate de méthyle, le polyacétate de vinyle, le polypropylène atactique ou un copolymère séquencé AB.

7. Solide particulaire selon l'une quelconque des revendications 1 à 6, contenant moins de 10% de particules ayant une grosseur inférieure à 10 µm,

8. Solide particulaire selon l'une quelconque des revendications 1 à 7, ayant une grosseur moyenne de particules de 40 à 80 µm.

9. Procédé de préparation d'un solide selon l'une quelconque des revendications 1 à 8, comprenant les étapes consistant à mettre en suspension, dans un milieu liquide inerte, un solide qui est un composé de formule générale

$$Mg(OR)_xX_{(2-x)}$$

dans laquelle

R est un groupement R' ou COR', R' étant un groupement hydrocarbyle,
X est un atome d'halogène, et
x a une valeur comprise entre 1 et 2 inclusivement,

à sécher par pulvérisation la suspension et à recueillir le solide séché par pulvérisation.

10. Composition de métal de transition qui est le produit de réaction d'un composé de métal de transition du groupe IVA, VA ou VIA de la classification périodique avec un solide particulaire selon l'une quelconque des revendications 1 à 8 ou préparé par le procédé de la revendication 9.

11. Composition selon la revendication 10 qui est le produit de réaction de tétrachlorure de titane avec un solide particulaire selon l'une quelconque des revendications 1 à 8 ou préparé par le procédé de la revendication 9.

12. Procédé de préparation d'une composition de métal de transition, comprenant la mise en réaction d'un solide particulaire selon l'une quelconque des revendications 1 à 8 ou préparé par le procédé de la revendication 9 avec un composé de métal de transition du groupe IVA, VA ou VIA de la classification périodique.

**13.** Procédé selon la revendication 12, dans lequel le composé de métal de transition est le tétrachlorure de titane.

**14.** Procédé selon la revendication 12 ou 13, dans lequel la réaction entre le solide particulaire et le composé de métal de transition est conduite en présence d'au moins une base de Lewis.

**15.** Catalyseur de polymérisation, comprenant

1 une composition de métal de transition selon la revendication 10 ou préparée par le procédé de la revendication 12 ou 13; et
2 un composé organique d'un métal des groupes I à IV de la classification périodique, ne faisant pas partie des métaux de transition.

**16.** Catalyseur selon la revendication 15, contenant en plus au moins une base de Lewis.

**17.** Catalyseur selon la revendication 15 ou 16, dans lequel le composé organique est le triéthylaluminium.

**18.** Procédé de fabrication d'un polymère ou d'un copolymère d'un monomère insaturé, dans lequel au moins un hydrocarbure monomère à insaturation éthylénique est mis en contact, dans des conditions de polymérisation, avec un catalyseur de polymérisation selon l'une quelconque des revendications 15 à 17.

**19.** Procédé selon la revendication 18, dans lequel l'hydrocarbure monomère à insaturation éthylénique est du propylène, éventuellement en combinaison avec de l'éthylène.

*Fig. 1.*

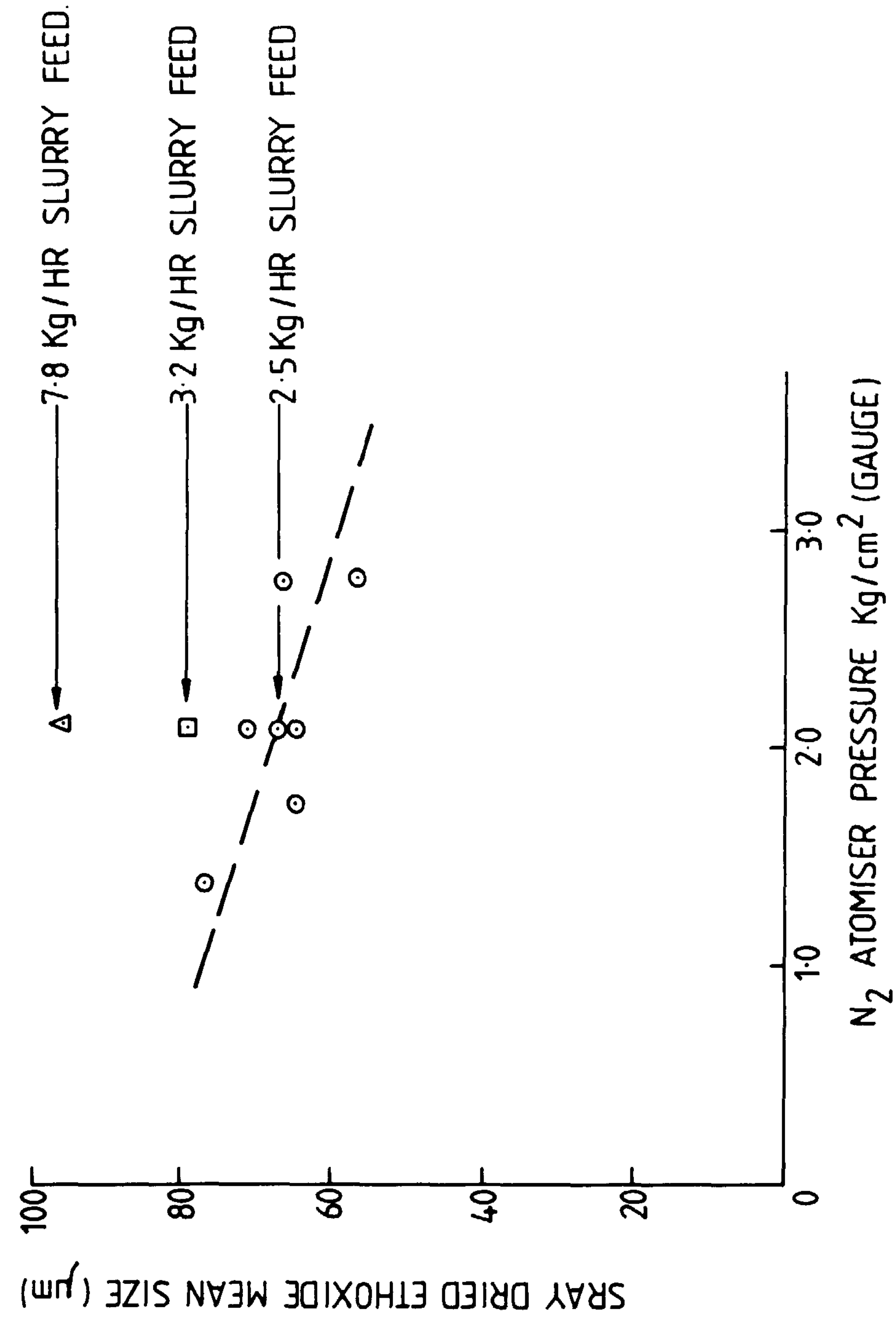
7·8 Kg/HR SLURRY FEED.
3·2 Kg/HR SLURRY FEED
2·5 Kg/HR SLURRY FEED
100
80
60
40
20
0
1·0
2·0
3·0
$N_2$ ATOMISER PRESSURE Kg/cm$^2$ (GAUGE)
SRAY DRIED ETHOXIDE MEAN SIZE (μm)